# EUROPEAN PATENT APPLICATION

(11) **EP 4 813 186 A1**
(43) Date of publication of application: **30.09.2026**
(21) Application number: 26167397.4
(22) Date of filing: 24.03.2026
(51) Int. Cl.: A01B 69/04, A01B 76/00, A01M 7/00

(54) **CONTROL METHOD, CONTROL PROGRAM, AND CONTROL SYSTEM OF WORKING MACHINE, AND WORKING MACHINE**

(30) Priority: 25.03.2025 JP 2025050193
(71) Applicant: Yanmar Holdings Co., Ltd., Osaka (JP)
(72) Inventor: YUKI, Hidehiro, Osaka-shi (JP); HOMMA, Terasu, Osaka-shi (JP); OTA, Kohei, Osaka-shi (JP); TERADA, Yuma, Osaka-shi (JP)
(74) Representative: Sekiguchi, Kazuya

(57) **Abstract**

[Problem] Provided is a control method, a control program, and a control system of a working machine, and a working machine capable of easily reducing time and effort of a user.

[Solution] A control method of a working machine (working vehicle 1) is a control method of a working machine including a connection unit 80, the working machine that performs work in a work field. The connection unit 80 can connect a wired device 81 by wire, and can connect a wireless device 82 via an adapter 83 in place of the wired device 81. The control method includes discriminating whether a connected device connected to the connection unit 80 is the wired device 81 or the wireless device 82.

## Description

### TECHNICAL FIELD

The present disclosure relates to a control method, a control program, and a control system of a working machine for controlling the working machine, and a working machine.

### BACKGROUND ART

As a related technology, a control system (tractor control unit) that controls a tractor (working machine) equipped with an agricultural working machine is known (refer to, for example, Patent Document 1). According to the control system according to the related technology, the control system mounted on the working machine (tractor) can wirelessly communicate with a wireless device (a control unit of an agricultural working machine) via a communication conversion device.

The communication conversion device is connected to the control system by wire. Therefore, in the working machine, a wired device can be directly connected by wire, or a wireless device can be indirectly connected wirelessly via the communication conversion device.

### PRIOR ART DOCUMENT

### PATENT DOCUMENT

Patent Document 1: JP-A-2023-157940

### SUMMARY OF INVENTION

### TECHNICAL PROBLEM

In the related technology described above, for example, in a case where appropriate settings are different depending on whether a device connected to a working machine is a wired device or a wireless device, a user needs to perform appropriate settings according to the device connected to the working machine, which takes time and effort of the user.

An object of the present invention is to provide a control method, a control program, and a control system of a working machine, and a working machine capable of easily reducing time and effort of a user.

### SOLUTION TO PROBLEM

A control method of a working machine according to one aspect of the present invention is a control method of a working machine including a connection unit, the working machine that performs work in a work field. The connection unit can connect a wired device by wire, and can connect a wireless device via an adapter in place of the wired device. The control method includes discriminating whether a connected device connected to the connection unit is the wired device or the wireless device.

A control program according to one aspect of the present invention is a control program for allowing one or more processors to execute the control method of the working machine.

A control system according to one aspect of the present invention is used in a working machine that includes a connection unit to which a wired device is connectable by wire and a wireless device is connectable via an adapter in place of the wired device, the working machine that performs work in a work field. The control system includes a discrimination processing unit. The discrimination processing unit discriminates whether a connected device connected to the connection unit is the wired device or the wireless device.

A working machine according to one aspect of the present invention includes the control system and a base machine controlled by the control system.

A working machine according to another aspect of the present invention is a working machine that performs work in a work field and includes a control device and a connection unit. The control device controls the working machine by an operation signal from an operation device including a wired device or a wireless device. The connection unit is a device for connecting the wired device by wire. The connection unit is configured to enable wired connection of an adapter for receiving the operation signal transmitted from the wireless device when the wireless device is operated.

### ADVANTAGEOUS EFFECTS OF INVENTION

According to the present invention, it is possible to provide a control method, a control program, and a control system of a working machine, and a working machine capable of easily reducing time and effort of a user.

### BRIEF DESCRIPTION OF DRAWINGS

Fig. 1 is an external view of a working vehicle according to a first embodiment as seen from the left front;
Fig. 2 is an external view of a back surface of the working vehicle according to the first embodiment as seen from a back surface side;
Fig. 3 is a diagram illustrating an example of crop rows on which the working vehicle according to the first embodiment is used;
Fig. 4 is a schematic diagram illustrating an entire configuration of an automatic work system that uses the working vehicle according to the first embodiment;
Fig. 5 is a schematic block diagram illustrating a principal configuration of the automatic work system according to the first embodiment;
Fig. 6 is an external view of a left side surface of the working vehicle according to the first embodiment as seen from the left;
Fig. 7 is an external view of a right side surface of the working vehicle according to the first embodiment as seen from the right;
Fig. 8 is an external view of an upper surface of the working vehicle according to the first embodiment as seen from above;
Fig. 9 is an external view of the back surface of the working vehicle according to the first embodiment as seen from the back surface side;
Fig. 10 is a schematic diagram illustrating a state of the working vehicle according to the first embodiment as seen obliquely from behind;
Fig. 11 is a schematic diagram for illustrating an operation of automatic travel of the working vehicle according to the first embodiment;
Fig. 12 is a schematic diagram for illustrating an operation related to manual travel of the working vehicle according to the first embodiment;
Fig. 13 is a schematic diagram illustrating an example of an error screen displayed when an operation device of the working vehicle according to the first embodiment is abnormal;
Fig. 14 is a schematic diagram for illustrating an operation of moving the working vehicle from a certain work route to another work route regarding automatic travel of the working vehicle according to the first embodiment;
Fig. 15 is a schematic diagram for illustrating recovery processing regarding automatic travel of the working vehicle according to the first embodiment;
Fig. 16 is a schematic diagram for illustrating the recovery processing regarding automatic travel of the working vehicle according to the first embodiment;
Fig. 17 is a schematic diagram illustrating an example of a recovery distance setting screen displayable by a control system according to the first embodiment;
Fig. 18 is a schematic diagram for illustrating recovery distance shortening processing regarding automatic travel of the working vehicle according to the first embodiment;
Fig. 19 is a flowchart illustrating an example of the recovery processing regarding automatic travel of the working vehicle according to the first embodiment;
Fig. 20 is a schematic diagram illustrating an example of the recovery processing regarding automatic travel of the working vehicle according to the first embodiment;
Fig. 21 is a schematic diagram illustrating an example of the recovery processing regarding automatic travel of the working vehicle according to the first embodiment; and
Fig. 22 is a schematic diagram illustrating an example of the recovery processing regarding automatic travel of the working vehicle according to the first embodiment.

### DESCRIPTION OF EMBODIMENTS

Hereinafter, embodiments of the present invention will be described with reference to the accompanying drawings. The following embodiments serve as an example embodying the present invention, and are not intended to limit the technical scope of the present invention.

### (First Embodiment)

### [1] Entire configuration

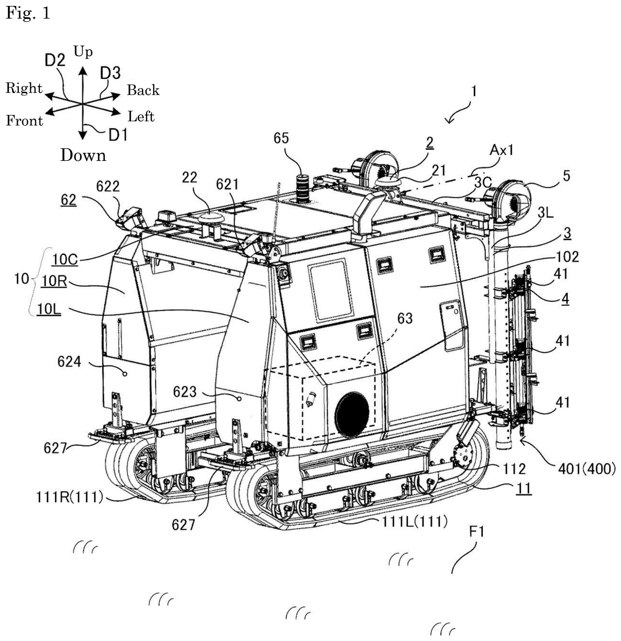

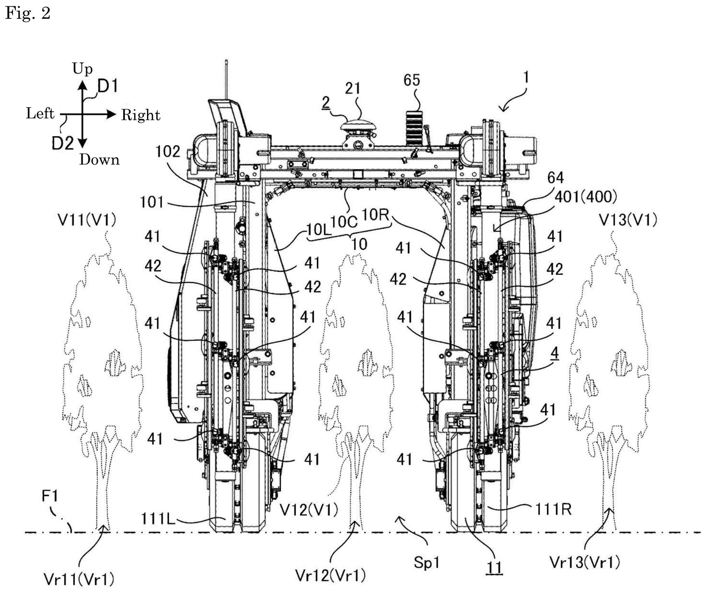

First, an entire configuration of a working vehicle 1 according to the present embodiment is described with reference to Figs. 1 to 5. In the present embodiment, the working vehicle 1 performs, on a crop V1 (refer to Fig. 2) grown in an agricultural field F1, for example, spray work of spraying a spray substance such as a chemical solution, water, or fertilizer, or weed work of weeding around the crop V1. The working vehicle 1 performs various types of work in a work field such as the agricultural field F1 while automatically traveling along a target route.

That is, the working vehicle 1 is configured to be able to execute the spray work or the weed work as the work. A working machine 400 is detachably attached to (a base machine 10 of) the working vehicle 1, and the work that can be executed by the working vehicle 1 varies depending on the type of the working machine 400 mounted on the working vehicle 1. In other words, the working machine 400 corresponding to the work executed by the working vehicle 1 is mounted on (the base machine 10 of) the working vehicle 1.

In the present embodiment, as the working machine 400 that can be mounted on the working vehicle 1, there is at least a sprayer 401. In addition, for example, the working machine 400 such as a weeder can be mounted on the working vehicle 1. In a state in which the sprayer 401 is mounted on the base machine 10 as the working machine 400, the working vehicle 1 can execute the spray work. In contrast, in a state in which the weeder is mounted on the base machine 10 as the working machine 400, the working vehicle 1 can execute the weed work.

Examples of the "working vehicle" referred to in the present disclosure include the working vehicles that perform various types of work such as a tractor, a rice transplanter, a sprayer, a seeder, a transplanter, and a combine, for example, in addition to the working vehicle that performs the spray work or the weed work. Furthermore, the "working vehicle" referred to in the present disclosure is not limited to an agricultural machine (farm machine) and may be, for example, a construction machine (heavy equipment) and the like. Furthermore, while the working vehicle 1 is an example of a working machine that performs work in a work field, the working machine is not limited to a "vehicle", and may be, for example, a working flying object such as a drone or a multicopter for spray work, a working ship or the like.

The "agricultural field" referred to in the present disclosure is an example of a work field where the working vehicle 1 performs various types of work such as the spray work, for example, while moving, and includes an orchard, pasture, a rice field, a field and the like where agricultural products are grown. In this case, the crop V1 grown in the agricultural field F1 is an agricultural product. Furthermore, in a case where trees are grown in a tree farm, the tree farm is the agricultural field F1, and in a case where trees to be used as lumber are grown in a forest as in forestry, the forest is the agricultural field F1. In this case, the crop V1 grown in the agricultural field F1 is a plant, a tree or the like. Note that, the work field where the working machine (working vehicle 1) performs work is not limited to the agricultural field F1, and may be other than the agricultural field F1. For example, when the working machine (working vehicle 1) is a construction machine, a site where the construction machine performs work is the work field.

In the present embodiment, as an example, the working vehicle 1 as the working machine performs work on the crop V1 grown in the agricultural field F1 while moving in the agricultural field F1, which is an orchard such as a vineyard or an apple orchard. The crop V1 is an example of a work target on which work such as the spray work is performed by the working vehicle 1 as the working machine, and is, for example, a grape tree.

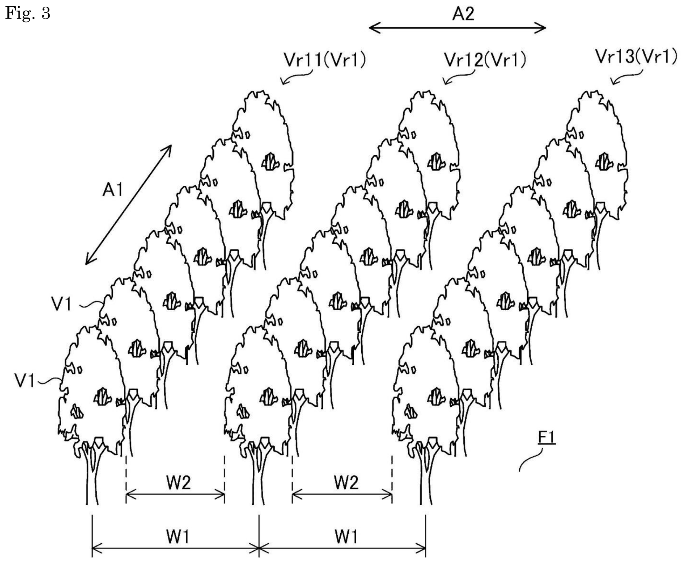

The crops V1 are arranged in a plurality of rows at predetermined intervals in the agricultural field F1. Specifically, as illustrated in Fig. 3, a plurality of crops V1 is linearly arranged to be planted in a longitudinal direction A1 in plan view. The plurality of crops V1 linearly arranged in the longitudinal direction A1 forms crop rows Vr1. Fig. 3 illustrates three crop rows Vr1 each including six crops V1 arranged in the longitudinal direction A1. The crop rows Vr1 are arranged at a predetermined pitch W1 in a width direction A2. Consequently, a working passage having a width W2 (< W1) corresponding to the interval between the crop rows Vr1 and extending in the longitudinal direction A1 is formed between the adjacent crop rows Vr1. The working vehicle 1 sprays the spray substance (chemical solution) on the crop V1 while moving (traveling) in the longitudinal direction A1 along the working passage. The crop row Vr1 is an example of a work target row including a plurality of crops V1 (work targets) and a plurality of crop rows Vr1 is arranged in the agricultural field F1.

The working vehicle 1 sprays the chemical solution on the crop V1 in a state in which the sprayer 401 is mounted as the working machine 400. In this case, the chemical solution is an example of the spray substance, and the crop V1 on which the spray substance (chemical solution) is sprayed is an example of a spray target. The "chemical solution" as the spray substance referred to herein is an agricultural chemical that is used for an improvement in efficiency of agriculture or preservation of crops, and includes a herbicide, a bactericide, a fungicide, an insecticide, a rodenticide, a growth promoter and a germination inhibitor for the crop V1 and the like.

As is described in detail below, the working vehicle 1 that travels in the agricultural field F1 includes the base machine 10 having a portal frame shape. That is, the base machine 10 includes a first block 10L and a second block 10R, which are arranged side by side in a left-and-right direction D2, and a coupling unit 10C that couples upper ends of the first block 10L and the second block 10R to each other. Consequently, the base machine 10 has a portal frame shape formed of the first block 10L, the second block 10R, and the coupling unit 10C surrounding three sides, that is, a left side, a right side, and an upper side, of a space Sp1. That is, the space Sp1 that opens in a front-and-back direction D3 is formed inside the base machine 10.

The working vehicle 1 further includes a traveling unit 11 including a pair of crawlers 111L and 111R arranged side by side in the left-and-right direction D2. The pair of crawlers 111L and 111R is provided below the first block 10L and the second block 10R, respectively, and is located on both sides of the space Sp1 in the left-and-right direction D2.

As illustrated in Fig. 2, the working vehicle 1 can perform, while traveling in an attitude in which the portal frame-shaped base machine 10 straddles one crop row Vr1, the work (spray work and the like) on the crops V1 in this crop row Vr1 and the crops V1 in the crop rows Vr1 adjacent to the crop row Vr1. In other words, the working vehicle 1 can travel in such a manner that the crops V1, which are the work targets, are allowed to pass through the space Sp1 inside the portal frame-shaped base machine 10. That is, in a case where there are crop rows Vr11, Vr12, and Vr13 as three work target rows arranged side by side in the left-and-right direction D2 as illustrated in Fig. 2, the working vehicle 1 can travel while the base machine 10 straddles any crop row Vr1 out of the three crop rows Vr11, Vr12, and Vr13.

Here, if the base machine 10 straddles the central crop row Vr12, the first block 10L travels on the working passage between the left crop row Vr11 and the crop row Vr12, and the second block 10R travels on the working passage between the right crop row Vr13 and the crop row Vr12. At that time, in a state in which the sprayer 401 is mounted as the working machine 400, the working vehicle 1 can simultaneously spray the spray substance (chemical solution) on crops V11 in the crop row Vr11, crops V12 in the crop row Vr12, and crops V13 in the crop row Vr13. In this manner, the working vehicle 1 according to the present embodiment can simultaneously spray the spray substance (chemical solution) on the spray targets (crops V1) in the three rows while traveling, so that the efficiency of the spray work is higher than that in a configuration in which the spray targets are sprayed on a row-by-row basis.

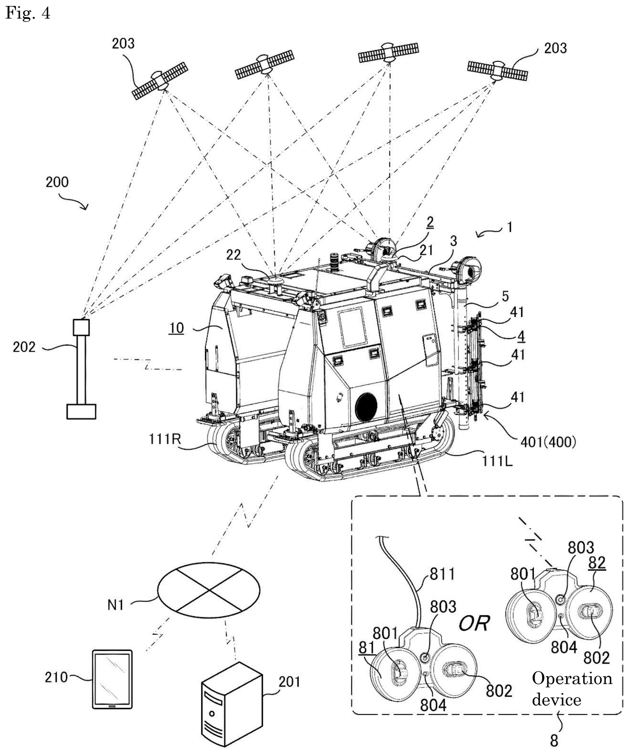

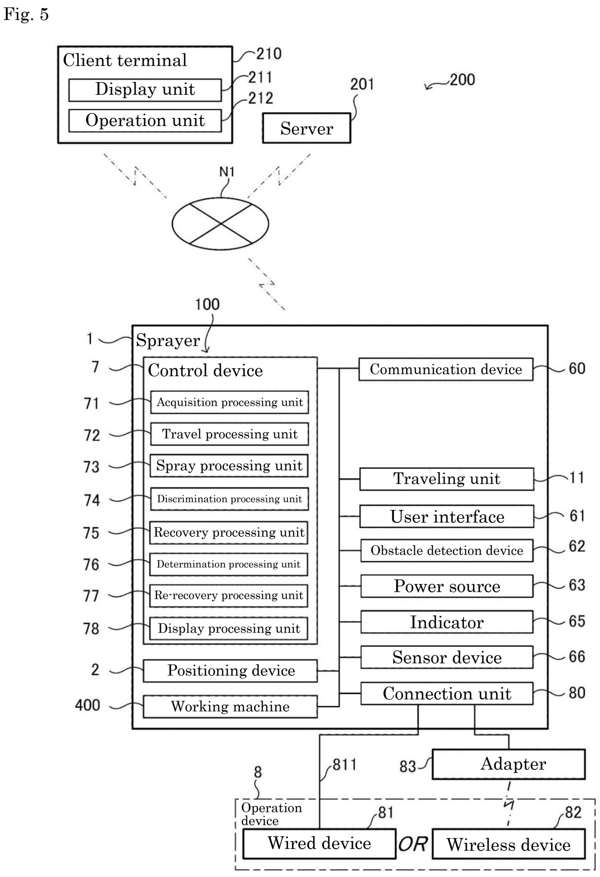

Furthermore, in the present embodiment, as an example, the working vehicle 1 is an unmanned vehicle that operates by automatic operation without operation (including remote operation) of a person (operator). Therefore, as illustrated in Figs. 4 and 5, the working vehicle 1 forms an automatic work system 200 together with a client terminal 210, a server 201, a base station 202, and a satellite 203. In other words, the automatic work system 200 includes the working vehicle 1, the client terminal 210, the server 201, the base station 202, and the satellite 203. Note that, at least one of the client terminal 210, the server 201, the base station 202, and the satellite 203 need not be included in the components of the automatic work system 200, and for example, the automatic work system 200 need not include the server 201, the base station 202, and the satellite 203.

The working vehicle 1, the client terminal 210, and the server 201 are communicable with each other. The term "communicable" referred to in the present disclosure indicates that information can be exchanged directly, or indirectly via a communication network (network) N1, a repeater or the like, in an appropriate communication method for wired communication or wireless communication (communication using radio waves or light as a medium). For example, the working vehicle 1 and the client terminal 210 are communicable with each other via the communication network N1 such as the Internet, a local area network (LAN), a wide area network (WAN), a public telephone line, a mobile telephone line network, a packet line network, or a wireless LAN. Here, the working vehicle 1 and the client terminal 210 are wirelessly connected to the communication network N1. Therefore, communication between the working vehicle 1 and the client terminal 210 includes at least wireless communication. Each of the working vehicle 1 and the client terminal 210 can wirelessly communicate with the server 201 via the communication network N1.

The satellite 203 is a positioning satellite forming a satellite positioning system such as a global navigation satellite system (GNSS), and transmits a GNSS signal (satellite signal). The base station 202 is a reference point (reference station) forming the satellite positioning system. The base station 202 transmits, to the working vehicle 1, correction information for calculating a current position and the like of the working vehicle 1.

The working vehicle 1 according to the present embodiment includes a positioning device 2 that detects a current position (latitude, longitude, altitude and the like), a current orientation and the like of the base machine 10. The positioning device 2 executes positioning processing of specifying (calculating) the current position, the current orientation and the like of the base machine 10 by means of the GNSS signal transmitted from the satellite 203. The positioning device 2 adopts, for example, a relatively highly accurate positioning method such as real time-kinematic (RTK) positioning that determines the position on the basis of positioning information (such as the GNSS signal) received by two receivers (base station 202 and antenna 21) and correction information generated by the base station 202.

The client terminal 210 is, for example, a general-purpose information processing device portable by the operator, such as a smartphone or a tablet terminal. The client terminal 210 is configured to output (transmit) at least a stop instruction (temporary stop instruction) for stopping automatic travel of the working vehicle 1 to the working vehicle 1 according to the operation of the operator, thereby enabling the remote operation of the working vehicle 1. Here, by wirelessly communicating with the working vehicle 1 via the communication network N1, the client terminal 210 can control the working vehicle 1 even in a remote place of the working vehicle 1, that is, in a remote place of the agricultural field F1, as long as the working vehicle 1 is in an environment connectable (communicable) to the communication network N1.

As illustrated in Fig. 5, the client terminal 210 includes a display unit 211 that displays various types of information and an operation unit 212 that receives an operation. The display unit 211 includes, for example, a liquid crystal display, an organic EL display or the like. The operation unit 212 includes, for example, a touch panel, a physical switch, a mouse, a keyboard or the like. In the present embodiment, as an example, the display unit 211 including the liquid crystal display and the operation unit 212 including the touch panel are integrated to form a touch panel display. Therefore, the operator can output, for example, a stop instruction (temporary stop instruction) from the client terminal 210 to the working vehicle 1 by operating the operation unit 212 on an operation screen displayed on the display unit 211.

Furthermore, the client terminal 210 has a function of setting (registering) various types of information regarding control of the working vehicle 1, such as a target route for automatic travel of the working vehicle 1. That is, the operator can operate the operation unit 212 on the operation screen displayed on the display unit 211 to set the target route and the like. Information such as the target route herein set is transmitted to the working vehicle 1 directly or indirectly via the server 201 and the like, and is used for the automatic travel of the working vehicle 1.

The client terminal 210 can display, on the display unit 211, various types of information related to the operation of the working vehicle 1, such as the current position, the current orientation, and a work situation of the working vehicle 1 during the automatic travel of the working vehicle 1. As an example, the client terminal 210 displays, on the display unit 211, a monitoring screen that displays the current position and the like of the working vehicle 1 together with the target route on a map imitating the agricultural field F1, so that the operator can easily visually grasp the situation of the working vehicle 1. Here, it is preferable that information such as a remaining amount of the chemical solution as the spray substance, a remaining amount of fuel, and a remaining amount of battery, for example, is also displayed on the monitoring screen.

Furthermore, the automatic work system 200 may further include, for example, a wireless communication terminal portable by the operator. The wireless communication terminal is configured to output (transmit) at least a stop instruction (temporary stop instruction) for stopping the automatic travel of the working vehicle 1 to the working vehicle 1 according to the operation of the operator, thereby enabling the remote operation of the working vehicle 1. Here, the wireless communication terminal is configured to be able to communicate with the working vehicle 1 by communication of a system different from the client terminal 210.

In this manner, the working vehicle 1 can wirelessly communicate with a plurality of types of operation terminals including at least the client terminal 210 and the wireless communication terminal, and is controlled in accordance with instructions from each of the plurality of types of operation terminals. In other words, each of the client terminal 210 and the wireless communication terminal forms a remote operation device (remote controller) capable of remotely operating the working vehicle 1, and the operator can stop the automatic travel of the working vehicle 1 even at a place distant from the working vehicle 1.

The server 201 is an information processing device such as a server device. The server 201 transmits, to the working vehicle 1, information such as the target route on which the working vehicle 1 is allowed to travel automatically.

The working vehicle 1 according to the present embodiment can also be operated by manual operation by an operator. Therefore, as illustrated in Figs. 4 and 5, the working vehicle 1 is configured to be connectable to an operation device for manual operation (manual operation device) 8. The operation device 8 is a device for manually controlling the working vehicle 1. The operation device 8 receives an operation for manual operation by the operator and outputs an operation signal corresponding to the operation to the working vehicle 1. The working vehicle 1 acquires an operation signal output from the operation device 8 according to the operation of the operator by a control device 7 (refer to Fig. 5), and operates (manually travels) according to the operation signal. The operation device 8 may form the automatic work system 200 together with the client terminal 210 and the like, or need not be included in the components of the automatic work system 200.

Here, the operation device 8 is alternatively selected from two types of devices that are a wired device 81 and a wireless device 82. That is, either the wired device 81 or the wireless device 82 is selected as the operation device 8 and connected to the working vehicle 1. Specifically, as illustrated in Fig. 5, the working vehicle 1 includes a single connection unit 80. Either the wired device 81 or the wireless device 82 can be connected to the connection unit 80 as the operation device 8.

The wired device 81 includes a cable 811 having a sufficient length, and is connected to a counterpart device by wire via the cable 811. In the present embodiment, the wired device 81 is connected to the connection unit 80 of the working vehicle 1 by wire. The connection unit 80 is a connector for detachably connecting the wired device 81 by wire, and (a connector of) a distal end of the cable 811 of the wired device 81 is connected thereto to connect the wired device 81 to the working vehicle 1 by wire.

The term "wired connection" referred to in the present disclosure means physical connection by a connection medium such as the cable 811, and in the present embodiment, the wired device 81 is connected to (the connection unit 80 of) the working vehicle 1 by wire to enable wired communication with the working vehicle 1. The cable 811 includes, for example, a conductor cable (copper cable), an optical fiber cable and the like, and in the present embodiment, the cable 811 is a conductor cable such as a twisted pair cable. Therefore, the wired device 81 is electrically connected to (the connection unit 80 of) the working vehicle 1.

The "wired communication" referred to in the present disclosure means communication in which signals are exchanged between two parties connected by a connection medium using the connection medium such as the cable 811 as a transmission medium. In the present embodiment, since the cable 811 is a conductor cable, the wired device 81 and the working vehicle 1 perform wired communication using an electric signal (voltage signal, current signal and the like) passing through the cable 811 as the transmission medium. In a case where the cable 811 is an optical fiber cable, the wired device 81 and the working vehicle 1 perform wired communication using an optical signal passing through the cable 811 as the transmission medium.

The wireless device 82 is a device wirelessly connected to a counterpart device. In the present embodiment, the wireless device 82 is wirelessly connected to an adapter 83 (refer to Fig. 5) connected by wire to the connection unit 80 of the working vehicle 1. The adapter 83 is a device (converter) for connecting the wireless device 82 to the connection unit 80, and is connected by wire to the connection unit 80 and wirelessly connected to the wireless device 82. The wireless device 82 is wirelessly connected to the adapter 83 connected by wire to the connection unit 80, thereby being connected to the working vehicle 1 via the adapter 83.

The term "wireless connection" referred to in the present disclosure means connection in a wirelessly communicable state without being physically connected by the connection medium such as the cable 811, and in the present embodiment, the wireless device 82 is wirelessly connected to the adapter 83 connected by wire to (the connection unit 80 of) the working vehicle 1 to enable communication with the working vehicle 1 via the adapter 83. Specifically, wired communication between the working vehicle 1 and the adapter 83 and wireless communication between the wireless device 82 and the adapter 83 enable the wireless device 82 to communicate with the working vehicle 1 via the adapter 83. In the present embodiment, the adapter 83 is connected by wire to (the connection unit 80 of) the working vehicle 1 by the conductor cable such as the twisted pair cable, and is electrically connected to (the connection unit 80 of) the working vehicle 1.

The term "wireless communication" referred to in the present disclosure means communication for exchanging signals between two wirelessly connected parties using radio waves, light (infrared rays, visible light or the like), ultrasonic waves or the like as the transmission medium. In the present embodiment, as an example, the wireless device 82 and the adapter 83 perform communication by wireless communication using radio waves as the transmission medium in compliance with a standard such as Wi-Fi (registered trademark), Bluetooth (registered trademark), or low-power radio (specified low-power radio) that does not require a license. The present invention is not limited thereto, and the wireless device 82 and the adapter 83 may perform wireless communication using light such as infrared rays as the transmission medium, for example.

As described above, the connection unit 80 of the working vehicle 1 connects (by wire or wirelessly) either the wired device 81 or the wireless device 82, and enables communication (by wire or wirelessly) between the connected device (wired device 81 or wireless device 82) and the working vehicle 1. In the present embodiment, the connection unit 80 is a connector that enables wired connection of the wired device 81, and enables connection of the wireless device 82 (wirelessly connected to the adapter 83) via the adapter 83 by connecting the adapter 83 by wire in place of the wired device 81.

Consequently, two types of devices including the wired device 81 and the wireless device 82 can be connected to the working vehicle 1 using the single connection unit 80 provided on the working vehicle 1. Therefore, the number of components can be reduced as compared with a case where separate connection units adapted to the wired device 81 and the wireless device 82 are provided. Furthermore, the wireless device 82 can be connected, using the connection unit 80, by using the adapter 83, to the existing working vehicle 1 including the connection unit 80 to which the wired device 81 can be connected.

Here, the wired device 81 and the wireless device 82 are the operation devices 8 for operating the working vehicle 1. That is, in a state in which the wired device 81 is connected to the connection unit 80 of the working vehicle 1, the wired device 81 is used as the operation device 8 for an operation for manual operation of the working vehicle 1 by the operator. In contrast, in a state in which the wireless device 82 is connected to the connection unit 80 of the working vehicle 1 (via the adapter 83), the wireless device 82 is used as the operation device 8 for an operation for manual operation of the working vehicle 1 by the operator.

When receiving the operation of the operator, the operation device 8 including the wired device 81 or the wireless device 82 transmits an operation signal corresponding to the operation to the working vehicle 1. Therefore, the working vehicle 1 operates (manually travels) according to the operation signal.

In the present embodiment, the wired device 81 is connected by wire to the connection unit 80 of the working vehicle 1 by the cable 811 having a sufficient length, and the wireless device 82 is wirelessly connected to the adapter 83 connected by wire to the connection unit 80 of the working vehicle 1. Therefore, the operation device 8 can be used at a position away from the base machine 10 of the working vehicle 1 regardless of whether the operation device 8 is the wired device 81 or the wireless device 82. Therefore, the operator can operate the working vehicle 1 manually by means of the operation device 8 without boarding the base machine 10 of the working vehicle 1, for example, while standing around the base machine 10, that is, from out of the base machine 10. In short, the operation device 8 can be operated outside the base machine 10. Therefore, for example, when loading or unloading the working vehicle 1 onto or from a transport vehicle, the operator can operate the working vehicle 1 manually in a safe place outside the base machine 10.

In the present embodiment, for convenience of description, a vertical direction in a state in which the working vehicle 1 can be used is defined as an up-and-down direction D1 as illustrated in Fig. 1. Furthermore, the left-and-right direction D2 and the front-and-back direction D3 are defined with reference to a direction as seen from the center point of the working vehicle 1 in plan view. That is, a travel direction of the working vehicle 1 during forward movement of the working vehicle 1 is the front in the front-and-back direction D3, and a travel direction of the working vehicle 1 during backward movement of the working vehicle 1 is the back in the front-and-back direction D3. Note that, these directions are not intended to limit a use direction (a direction at the time of use) of the working vehicle 1.

### [2] Details of working vehicle

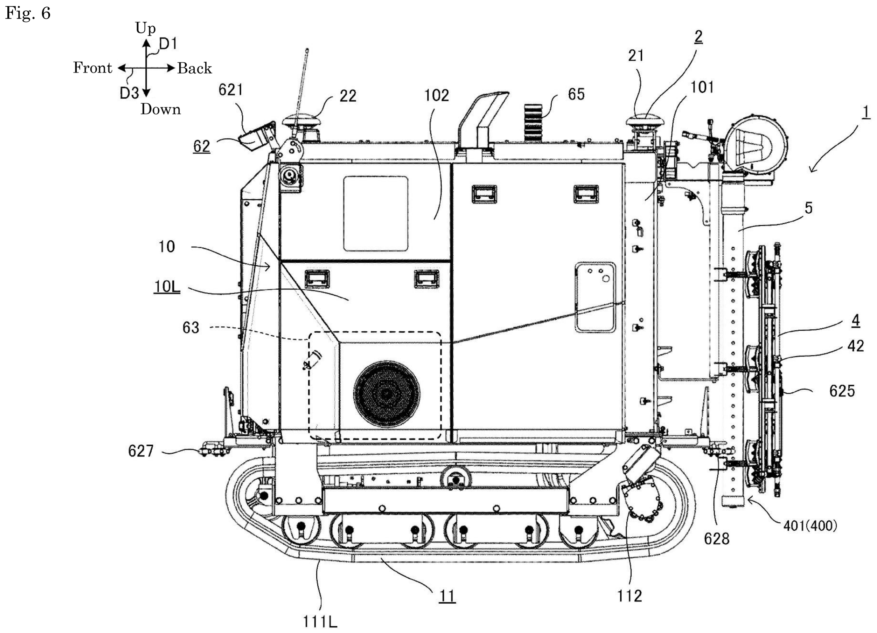

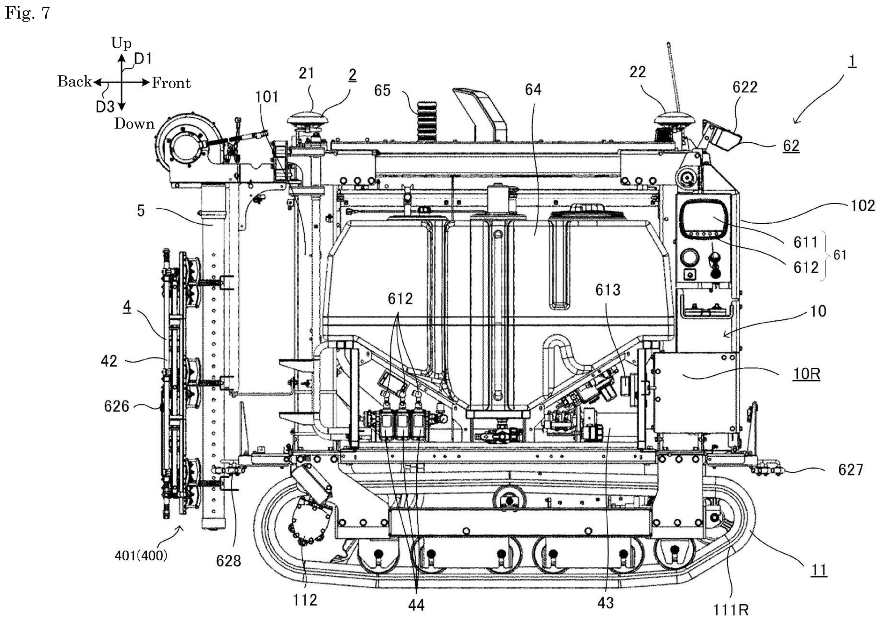

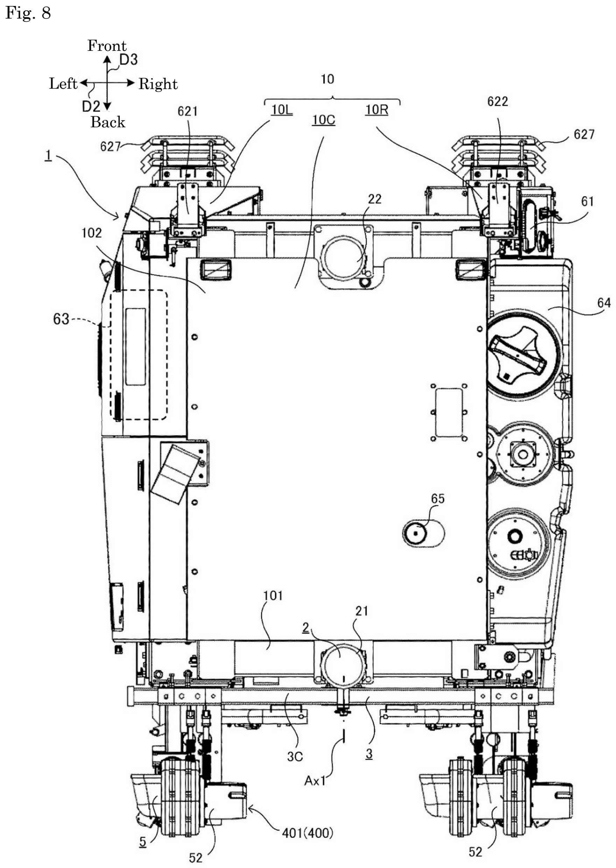

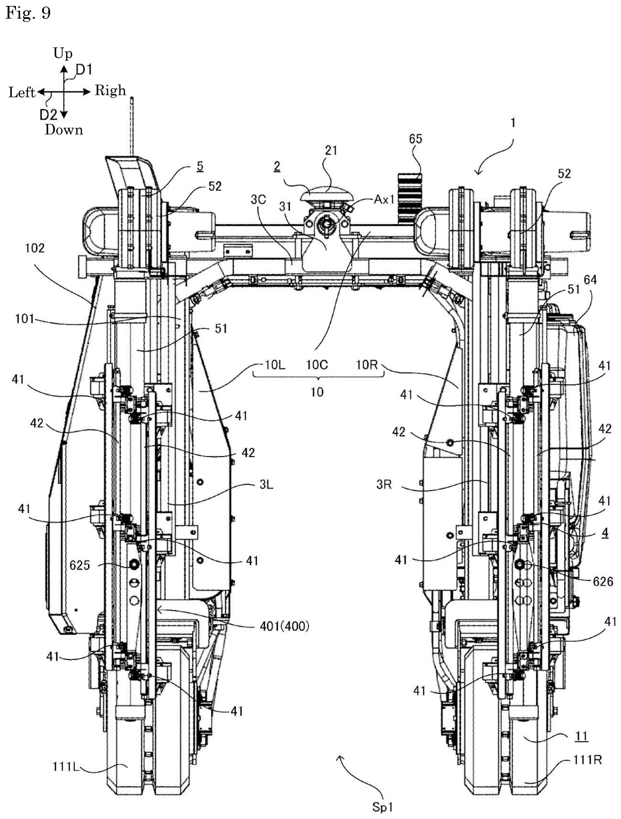

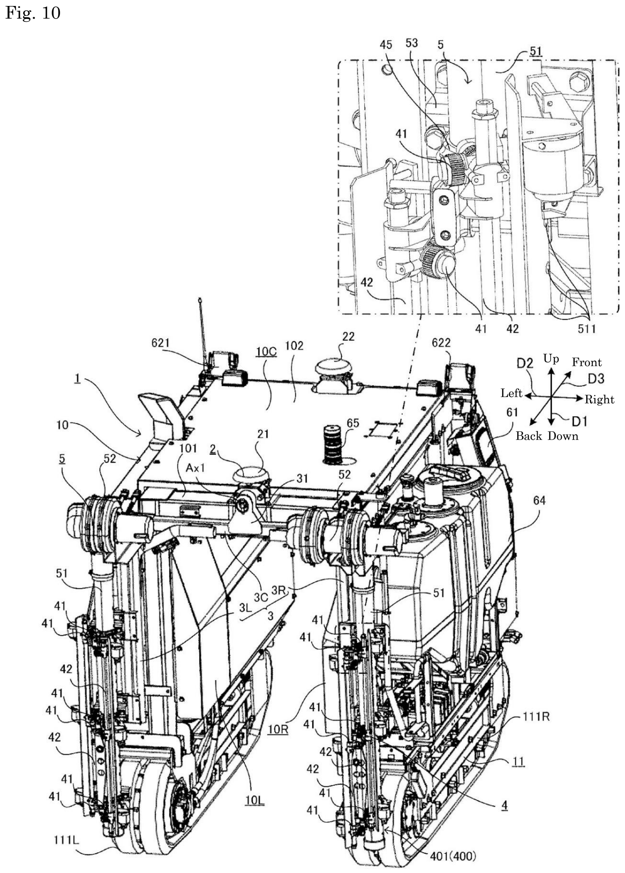

Next, a configuration of the working vehicle 1 is described in more detail with reference to Figs. 1, 2, and 5 to 10. Fig. 1 is an external view of the working vehicle 1 as seen from the left front, and Fig. 2 is an external view of a back surface of the working vehicle 1 as seen from a back surface side (from behind). Fig. 5 is a schematic block diagram illustrating a principal configuration of the working vehicle 1. Fig. 6 is an external view of a left side surface of the working vehicle 1 as seen from the left, Fig. 7 is an external view of a right side surface of the working vehicle 1 as seen from the right, and Fig. 8 is an external view of an upper surface of the working vehicle 1 as seen from above. Fig. 9 is an external view of the back surface of the working vehicle 1 as seen from the back surface side (from behind). Fig. 10 is a schematic diagram illustrating a state of the working vehicle 1 as seen obliquely from behind and illustrates a partially enlarged view in a balloon.

The working vehicle 1 includes the base machine 10, the traveling unit 11, the support frame 3, and the working machine 400. The working machine 400 is detachably mounted on the base machine 10, and the working machine 400 is detachably attached to the working vehicle 1. In the present embodiment, as the working machine 400 that can be mounted on the base machine 10, there is at least the sprayer 401 as described above. Hereinafter, a case where the sprayer 401 is mounted on the base machine 10 as the working machine 400 and the working vehicle 1 executes the spray work will be described as an example.

In the present embodiment, as illustrated in Fig. 5, the working vehicle 1 further includes the positioning device 2, the control device 7, the operation device 8, a communication device 60, a user interface 61, an obstacle detection device 62, a power source 63, a tank 64 (refer to Fig. 7), an indicator 65, a sensor device 66 and the like. The working vehicle 1 further includes a fuel tank, a battery and the like. In the present embodiment, structures of the working vehicle 1, such as the base machine 10 and the support frame 3, are basically made of metal, and the material thereof is selected according to required strength, weather resistance and the like. Note that, the material of the structures of the working vehicle 1 is not limited to metal, and for example, resin, wood or the like may be used as appropriate.

### Specific configuration other than working machine

First, a specific configuration of the working vehicle 1 excluding the working machine 400 will be described.

The base machine 10 is a main body of the working vehicle 1, and supports most of the components of the working vehicle 1, such as the positioning device 2 and the support frame 3. The base machine 10 includes a frame 101 (refer to Fig. 2) and a cover 102. The frame 101 is a member forming a framework of the base machine 10, and supports heavy objects such as the power source 63 and the tank 64, for example. The cover 102 is a member forming an outer shell of the base machine 10, and is attached to the frame 101 so as to cover at least a part of the frame 101 and members mounted on the frame 101. On a part of the rear surface (back surface) and right side surface of the base machine 10, the frame 101 is not covered with the cover 102, and is exposed. The cover 102 is divided into a plurality of parts, and the plurality of parts is formed so as to be individually detachable from the frame 101. Therefore, for example, only parts of the cover 102, the parts corresponding to some devices (members) such as the power source 63, can be detached, so that some devices (members) such as the power source 63 can be exposed.

As described above, the base machine 10 includes the first block 10L and the second block 10R arranged side by side in the left-and-right direction D2. The first block 10L and the second block 10R face each other with an interval of a certain value or larger in the left-and-right direction D2. In the present embodiment, as an example, the first block 10L is located on the left side, and the second block 10R is located on the right side. Therefore, a left part of the base machine 10 is formed of the first block 10L, and a right part of the base machine 10 is formed of the second block 10R. Furthermore, the base machine 10 includes the coupling unit 10C that couples the first block 10L and the second block 10R. In front view (as seen from the front), the coupling unit 10C is long in the left-and-right direction D2, and each of the first block 10L and the second block 10R is long in the up-and-down direction D1.

The coupling unit 10C couples the upper ends of the first block 10L and the second block 10R to each other, in other words, the first block 10L and the second block 10R protrude downward from both ends (in the left-and-right direction D2) of the coupling unit 10C, respectively. Consequently, the base machine 10 has a portal frame shape formed of the first block 10L, the second block 10R, and the coupling unit 10C, the portal frame shape opening downward in addition to both sides in the front-and-back direction D3. The space Sp1 that is surrounded on the three sides by the first block 10L, the second block 10R, and the coupling unit 10C and opens in the front-and-back direction D3 is formed inside the base machine 10.

In short, as illustrated in Fig. 2, the base machine 10 forms, between the first block 10L and the second block 10R, the space Sp1 through which the crop V1 (work target) on which the work (spray work) by the working machine 400 (herein, the sprayer 401) is performed is allowed to pass. Specifically, the dimensions of each unit of the base machine 10 are set so as to form the space Sp1 having the height and width that are equal to or greater than a standard size of the crop V1 being the spray target. Therefore, as long as the crop V1 has the standard size, the base machine 10 can allow the crop V1 to pass through the space Sp1, in a state of straddling the crop V1, with an interval of a predetermined value or larger to prevent the crop V1 from coming into contact with the base machine 10. While the crop V1 is passing through the space Sp1, the first block 10L is located to the left of the crop V1, the second block 10R is located to the right of the crop V1, and the coupling unit 10C is located above the crop V1.

More specifically, in the present embodiment, the base machine 10 is structured substantially symmetrically in the left-and-right direction D2. The first block 10L and the second block 10R are formed into rectangular shapes having approximately the same size and shape in side view. The first block 10L and the second block 10R each have a shape that is flat in the left-and-right direction D2, the smallest dimension of which is in the left-and-right direction D2 among the up-and-down direction D1, the left-and-right direction D2, and the front-and-back direction D3. In each of the first block 10L and the second block 10R, a part above the central part in the up-and-down direction D1 is formed into a tapered shape that reduces in dimension in the left-and-right direction D2 toward the upper end. The coupling unit 10C is formed into a rectangular shape having a larger dimension in the front-and-back direction D3 than in the left-and-right direction D2 in plan view. The coupling unit 10C has a shape that is flat in the up-and-down direction D1, the smallest dimension of which is in the up-and-down direction D1 among the up-and-down direction D1, the left-and-right direction D2, and the front-and-back direction D3.

In this manner, the base machine 10 can be roughly divided into three parts (blocks) including the first block 10L, the second block 10R, and the coupling unit 10C. Each of the first block 10L, the second block 10R, and the coupling unit 10C includes the frame 101 and the cover 102. In other words, each of the first block 10L and the second block 10R includes the frame 101 and the cover 102. Moreover, most of the components of the working vehicle 1 such as the positioning device 2 and the support frame 3 are dispersedly provided on the first block 10L, the second block 10R, and the coupling unit 10C.

The traveling unit 11 is a traveling device (vehicle body) that allows the working vehicle 1 to travel, and is provided below the base machine 10. The traveling unit 11 allows the base machine 10 to travel (including turn) on the ground, so that the base machine 10 can move in the agricultural field F1 in the left-and-right direction D2 and in the front-and-back direction D3. Such traveling unit 11 is provided on the base machine 10, so that the working vehicle 1 can perform work while moving in the agricultural field F1.

The traveling unit 11 includes a pair of crawlers (crawlers) 111L and 111R arranged side by side in the left-and-right direction D2 (refer to Fig. 1). The pair of crawlers 111L and 111R is arranged with a certain interval in the left-and-right direction D2, and the space Sp1 for allowing the crop V1 being the work target to pass through is formed between the pair of crawlers 111L and 111R. That is, the left crawler 111L located to the left of the space Sp1 and the right crawler 111R located to the right of the space Sp1 face each other across the space Sp1. In a case where the left crawler 111L and the right crawler 111R are not particularly distinguished from each other, each of the crawlers 111L and 111R is also simply referred to as the "crawler 111". The traveling unit 11 includes a motor 112 that drives the crawler 111 (refer to Fig. 1). That is, the traveling unit 11 is a crawler (endless track) type traveling device that allows the motor 112 to drive an endless belt-shaped crawler 111, thereby allowing the working vehicle 1 to travel.

Here, at least two motors 112 are provided corresponding to the pair of crawlers 111L and 111R. The left motor 112 that drives the left crawler 111L and the right motor 112 that drives the right crawler 111R can drive the crawlers 111 individually. In the present embodiment, as an example, the motor 112 is a hydraulic motor (hydraulic actuator) and drives the crawler 111 by being supplied with hydraulic oil from a hydraulic pump. According to this configuration, even in a case where a road surface condition of the agricultural field F1 is bad, the base machine 10 can travel relatively stably.

Here, the crawlers 111 and the motors 112 are provided below the first block 10L and the second block 10R. That is, the first block 10L includes the left crawler 111L and the motor 112 that drives the crawler 111L, and the second block 10R includes the right crawler 111R and the motor 112 that drives the crawler 111R. In the present embodiment, the pair of crawlers 111L and 111R and the pair of motors 112 are formed substantially symmetrically in the left-and-right direction D2. In this manner, the pair of traveling units 11 is arranged at a distance equal to the space Sp1 in the left-and-right direction D2, so that the working vehicle 1 can travel in a relatively stable attitude in various road surface conditions of the agricultural field F1 including a horizontally inclined surface that is lower in one side in the left-and-right direction D2.

Here, the pair of crawlers 111L and 111R is driven by power from the power source 63 in a state in which the speed can be varied independently by a hydrostatic continuously variable transmission. Therefore, the base machine 10 enters a forward moving state of moving straight in a forward direction by driving the pair of crawlers 111L and 111R at equal speeds in the forward direction, and enters a backward moving state of moving straight in a backward direction by driving the pair of crawlers 111L and 111R at equal speeds in the backward direction. The base machine 10 enters a forward turning state of turning while moving forward by driving the pair of crawlers 111L and 111R at unequal speeds in the forward direction, and enters a backward turning state of turning while moving backward by driving the pair of crawlers 111L and 111R at unequal speeds in the backward direction. The base machine 10 enters a pivot turning (pivot turning) state by driving one of the pair of crawlers 111L and 111R while stopping the drive of the other, and enters a spin turning (spin turning) state by driving the pair of crawlers 111L and 111R at equal speeds in the forward direction and in the backward direction. The base machine 10 enters a travel stop state by stopping the drive of the pair of crawlers 111L and 111R.

The power source 63 or the like is mounted on the first block 10L, and the tank 64 or the like is mounted on the second block 10R. In this manner, the components of the working vehicle 1 are distributed to be arranged in the first block 10L and the second block 10R of the base machine 10, so that the equilibration in the left-and-right direction D2 and the lowering of the center of gravity are promoted for the working vehicle 1. As a result, the working vehicle 1 can travel stably on an inclined surface and the like of the agricultural field F1.

As described above, the positioning device 2 is a device that detects the current position, current orientation and the like of the base machine 10. The positioning device 2 includes at least an antenna 21. The antenna 21 receives the GNSS signal and the like transmitted from the satellite 203. That is, the antenna 21 includes a position specifying antenna for specifying the position of the base machine 10. Here, the antenna 21 is arranged on an upper surface (top surface) of the base machine 10 so as to facilitate the reception of the signal (GNSS signal) from the satellite 203. In other words, the antenna 21 is arranged in a position higher than the highest position of the base machine 10. Furthermore, the positioning device 2 includes an attitude detection unit or the like that detects the attitude of the base machine 10.

In the present embodiment, the positioning device 2 further includes an antenna 22 that is a second antenna, in addition to the antenna 21 that is a first antenna. The positioning device 2 receives the GNSS signal and the like by each of the two antennas 21 and 22. Here, the antenna 22 (the second antenna) is arranged side by side with the antenna 21 (first antenna) in the front-and-back direction D3. Consequently, the positioning device 2 can transmit and receive the signal (such as the GNSS signal) by each of the antennas 21 and 22. Especially, in a case where the antennas 21 and 22 are the position specifying antennas, the current positions of front and rear parts of the base machine 10 can be specified, so that it becomes possible to also specify the direction (current orientation) of the base machine 10.

The support frame 3 is a member that is attached to one end of the base machine 10 in the front-and-back direction D3 and supports the working machine 400 (sprayer 401 or weeder 402). In the present embodiment, the support frame 3 is attached to a rear end of the base machine 10. Similarly to the base machine 10, the support frame 3 has a portal frame shape, and is arranged in a position overlapping the base machine 10 in back view (as seen from behind). That is, the support frame 3 includes a vertical frame 3L (first vertical frame) and a vertical frame 3R (second vertical frame), which are arranged side by side in the left-and-right direction D2, and a horizontal frame 3C coupling upper ends of the vertical frame 3L and the vertical frame 3R. Consequently, the vertical frame 3L, the vertical frame 3R, and the horizontal frame 3C of the support frame 3 form a portal frame shape that surrounds the three sides, that is, the left side, the right side, and the upper side, of the space Sp1.

Specifically, the support frame 3 includes the vertical frame 3L and the vertical frame 3R, which are arranged side by side in the left-and-right direction D2. The vertical frame 3L and the vertical frame 3R face each other at an interval of a certain value or larger in the left-and-right direction D2. In the present embodiment, as an example, the vertical frame 3L is located on the left side, and the vertical frame 3R is located on the right side. Therefore, the vertical frame 3L is located behind the first block 10L of the base machine 10, and the vertical frame 3R is located behind the second block 10R of the base machine 10. In back view (as seen from behind), the horizontal frame 3C is long in the left-and-right direction D2, and the vertical frame 3L and the vertical frame 3R are long in the up-and-down direction D1.

Here, the horizontal frame 3C couples the upper ends of the vertical frame 3L and the vertical frame 3R, in other words, the vertical frame 3L and the vertical frame 3R protrude downward from both ends (in the left-and-right direction D2) of the horizontal frame 3C, respectively. In this manner, the support frame 3 includes the horizontal frame 3C that is long in the left-and-right direction D2 and the pair of vertical frames 3L and 3R that are long in the up-and-down direction D1 and protrude downward from both ends of the horizontal frame 3C, respectively. Consequently, the support frame 3 has a portal frame shape formed of the vertical frame 3L, the vertical frame 3R, and the horizontal frame 3C, the portal frame shape opening downward in addition to both sides in the front-and-back direction D3. The space Sp1 that is surrounded on the three sides by the vertical frame 3L, the vertical frame 3R, and the horizontal frame 3C and opens in the front-and-back direction D3 is formed inside the support frame 3.

In short, the support frame 3 forms, between the pair of vertical frames 3L and 3R, the space Sp1 through which the crop V1 (work target) as the work target is allowed to pass. Specifically, the dimensions of each unit of the support frame 3 are set so as to form the space Sp1 having a height and width that are equal to or greater than the standard size of the crop V1 being the work target. Therefore, as long as the crop V1 has the standard size, the support frame 3 can allow the crop V1 to pass through the space Sp1, in a state of straddling the crop V1, with an interval of a predetermined value or larger to prevent the crop V1 from coming into contact with the support frame 3. While the crop V1 is passing through the space Sp1, the vertical frame 3L is located to the left of the crop V1, the vertical frame 3R is located to the right of the crop V1, and the horizontal frame 3C is located above the crop V1.

More specifically, in the present embodiment, the support frame 3 is formed substantially symmetrically in the left-and-right direction D2. Each of the vertical frame 3L and the vertical frame 3R has a cylindrical shape that is circular in cross section. In the present embodiment, as an example, each of the vertical frame 3L and the vertical frame 3R includes two cylindrical members arranged side by side. The horizontal frame 3C has a rectangular tubular shape that is rectangular in cross section. Here, the vertical frame 3L and the vertical frame 3R are firmly fixed to the horizontal frame 3C by appropriate fixing means such as coupling fittings, brace fittings, or welding. Therefore, each of the vertical frame 3L and the vertical frame 3R maintains a state of being orthogonal to the horizontal frame 3C. In other words, in back view, each of a corner between the vertical frame 3L and the horizontal frame 3C and a corner between the vertical frame 3R and the horizontal frame 3C has a right angle.

In the present embodiment, the support frame 3 is supported by the base machine 10 so as to be rotatable about a rotation axis Ax1 (refer to Figs 8 and 9) in a state of maintaining a relative positional relationship between the pair of vertical frames 3L and 3R and the horizontal frame 3C. The rotation axis Ax1 is an axis passing through a fulcrum 31 provided on the horizontal frame 3C and extending in the front-and-back direction D3. That is, the support frame 3 that supports the working machine 400 is supported by the base machine 10 so as to be rotatable about the rotation axis Ax1 extending in the front-and-back direction D3. Here, the term "rotation axis" referred to in the present disclosure means a virtual axis (straight line) as the center of rotary motion of a rotor. That is, the rotation axis Ax1 is a virtual axis without substance. Note that, the rotation axis Ax1 may be a member with substance such as an axis pin, for example.

The communication device 60 is a communication interface for executing data communication according to a predetermined communication protocol with an external device such as the server 201 and the client terminal 210.

The user interface 61 is a device that performs at least one of output of information to a user and reception of an operation. Here, as illustrated in Fig. 7, the user interface 61 includes a display unit 611 such as a liquid crystal display or an organic EL display that displays various types of information, and an operation unit 612 such as a touch panel, a knob, or a push button switch that receives an operation. An operator being an example of the user can operate the operation unit 612 in accordance with an operation screen displayed on the display unit 611 to perform various settings. Specifically, the operator operates the operation unit 612 of the user interface 61 and sets operating conditions and the like of the working machine 400. Examples of the operating conditions of the working machine 400 include a pressure (spray pressure), a flow rate and the like when spraying the spray substance from a spray nozzle 41 of the sprayer 401.

The obstacle detection device 62 includes a first detection unit 621 and a second detection unit 622. Both the first detection unit 621 and the second detection unit 622 are arranged toward the front of the base machine 10. The first detection unit 621 is arranged at a left front end of the upper surface of the base machine 10, and the second detection unit 622 is arranged at a right front end of the upper surface of the base machine 10. That is, the obstacle detection device 62 is mounted on the base machine 10 of the working vehicle 1, and includes a plurality of detection units (first detection unit 621 and second detection unit 622) arranged to be spaced apart in a width direction (left-and-right direction D2) orthogonal to a travel direction (front-and-back direction D3) of the working vehicle 1 in plan view.

Each of the first detection unit 621 and the second detection unit 622 includes a sensor such as light detection and ranging (LiDAR), for example, and detects a peripheral condition of the base machine 10. In the present embodiment, as an example, each of the first detection unit 621 and the second detection unit 622 is a three-dimensional sensor that measures a distance to each ranging point (measurement target) within a measurement range by a time-of-flight (TOF) method to measure a distance to the ranging point on the basis of a round-trip time it takes for light or sound to travel to and back from the ranging point. Examples of the peripheral condition of the base machine 10 include, for example, the presence or absence of an object (such as an obstacle) that is present ahead of the base machine 10 in the travel direction, a position (distance and orientation) of the object and the like.

The obstacle detection device 62 further includes a first sensor 623 (refer to Fig. 1), a second sensor 624 (refer to Fig. 1), a third sensor 625 (refer to Fig. 6), and a fourth sensor 626 (refer to Fig. 7). Both of the first sensor 623 and the second sensor 624 are arranged toward the front of the base machine 10, and both of the third sensor 625 and the fourth sensor 626 are arranged toward the back of the base machine 10. The first sensor 623 is arranged on a front surface of the first block 10L, and the second sensor 624 is arranged on a front surface of the second block 10R. The third sensor 625 is attached to the vertical frame 3L, and the fourth sensor 626 is attached to the vertical frame 3R.

Each of the first sensor 623 to the fourth sensor 626 includes, for example, a sensor such as a sonar sensor, a radar, or a LiDAR, and detects the peripheral condition of the base machine 10. In the present embodiment, as an example, each of the first sensor 623 to the fourth sensor 626 is a three-dimensional sensor that measures a distance to each ranging point (measurement target) within a measurement range by a time-of-flight (TOF) method to measure a distance to the ranging point on the basis of a round-trip time it takes for light or sound to travel to and back from the ranging point. Examples of the peripheral condition of the base machine 10 include, for example, the presence or absence of an object (such as an obstacle) that is present ahead of the base machine 10 in the travel direction, a position (distance and orientation) of the object and the like.

The obstacle detection device 62 further includes a front contact sensor 627 and a back contact sensor 628. A pair of left and right front contact sensors 627 is arranged on a front side of the base machine 10, and a pair of left and right back contact sensors 628 is placed at a back side of the base machine 10. Each of the front contact sensors 627 and the back contact sensors 628 detects an obstacle in a case where the obstacle comes into contact. Each of the sensors transmits a detection signal to the control device 7 when detecting an obstacle.

The power source 63 is a drive source that supplies power to at least the traveling unit 11. The power source 63 includes an engine such as a diesel engine, for example. The power source 63 drives the hydraulic pump and supplies hydraulic oil from the hydraulic pump to, for example, the motor 112 and the like of the traveling unit 11 to drive the traveling unit 11 and the like. Electronic equipment such as the positioning device 2, the control device 7, and the communication device 60 is connected to a battery and can operate even while the power source 63 is shut down.

The tank 64 stores the spray substance such as the chemical solution. The spray substance stored in the tank 64 is supplied to the sprayer 401, and sprayed from the spray nozzle 41 of the sprayer 401. The tank 64 can be refilled with the chemical solution being the spray substance from the outside. The capacity of the tank 64 is, for example, approximately 200 L.

The indicator 65 is arranged on the upper surface of the base machine 10. As an example, the indicator 65 is formed into a columnar shape that is long in the up-and-down direction D1. An illuminating state of the indicator 65 changes according to an operating state (such as a traveling state and an execution state of the spray work) of the working vehicle 1. Consequently, the operating state of the working vehicle 1 can be visually recognized even from the surroundings of the working vehicle 1.

The sensor device 66 includes, for example, an inertial measurement unit (IMU) that detects the attitude of the base machine 10. The inertial measurement unit includes an inertial sensor such as an angular velocity sensor and an acceleration sensor, and detects the attitude (inclination or the like) of the base machine 10 by being mounted on the base machine 10.

The sensor device 66 includes, for example, a remaining amount sensor that detects the remaining amount of the chemical solution as the spray substance and the remaining amount of the fuel, for example. As an example, the sensor device 66 detects the remaining amount of the chemical solution from the amount of the chemical solution in the tank 64. Similarly, the sensor device 66 detects the remaining amount of fuel from the amount of fuel in the fuel tank.

Since the wired device 81 and the wireless device 82 are the operation devices 8 for operating the working vehicle 1, a common configuration is basically adopted. Specifically, as illustrated in FIG. 4, each of the wired device 81 and the wireless device 82 as the operation device 8 includes a first travel operation unit 801, a second travel operation unit 802, a switch operation unit 803, and an indicator lamp 804. In the present embodiment, as an example, as illustrated in Fig. 4, the first travel operation unit 801, the second travel operation unit 802, and the switch operation unit 803 are mechanical switches such as a lever switch, a slide switch, a joystick, a seesaw switch, or a push button switch. The operation device 8 includes a circuit board therein, and when receiving an operation on the first travel operation unit 801, the second travel operation unit 802, or the switch operation unit 803 from the operator, the operation device 8 outputs an operation signal (electric signal) in accordance with the operation. For example, when the operator operates the first travel operation unit 801 upward, the operation device 8 outputs an operation signal indicating that the first travel operation unit 801 has been operated upward.

The following operations are assigned to the first travel operation unit 801, the second travel operation unit 802, and the switch operation unit 803, respectively. An operation for moving the base machine 10 forward and backward is assigned to the first travel operation unit 801 including a lever switch that can be operated in the vertical direction (up-and-down direction) as seen from the operator. An operation for turning the base machine 10 to the left and to the right is assigned to the second travel operation unit 802 including a lever switch that can be operated in the horizontal direction (left-and-right direction) as seen from the operator. An operation for enabling a manual travel mode for allowing the traveling unit 11 to manually travel is assigned to the switch operation unit 803 including a push button switch. The indicator lamp 804 is, for example, an LED and is turned on when the manual travel mode is enabled.

In the present embodiment, both the first travel operation unit 801 and the second travel operation unit 802 are lever type (stick type) operating tools, so that, for example, the first travel operation unit 801 can receive an operation of moving between a "neutral position" and a "forward position" or between the "neutral position" and a "backward position". Similarly, the second travel operation unit 802 can receive an operation of moving between the "neutral position" and a "right turn position" or between the "neutral position" and a "left turn position". Here, the "neutral position" is the neutral position, and in a state in which the operator is not in contact with the first travel operation unit 801 and the second travel operation unit 802, both the first travel operation unit 801 and the second travel operation unit 802 return to the "neutral position". The "forward position" of the first travel operation unit 801 is a movable limit position on an upper side as seen from the operator, and the "backward position" is a movable limit position on a lower side as seen from the operator. The "right turn position" of the second travel operation unit 802 is a movable limit position on a right side as seen from the operator, and the "left turn position" is a movable limit position on a left side as seen from the operator. Therefore, for example, when receiving, from the operator, an operation involving the movement of the first travel operation unit 801 from the "neutral position" toward the "forward position" (that is, the upper side), the operation device 8 outputs an operation signal in accordance with the operation amount (amount of movement of the first travel operation unit 801).

The control device 7 mainly includes, for example, a computer system including one or more processors such as a central processing unit (CPU) and one or more memories such as read only memory (ROM) and random access memory (RAM), and executes various types of processing (information processing). In the present embodiment, the control device 7 is an integrated controller that controls an entire working vehicle 1, and is constituted by, for example, an electronic control unit (ECU). Note that, the control device 7 may be provided separately from the integrated controller, or may mainly include one processor, or a plurality of processors.

As illustrated in Fig. 5, the control device 7 includes an acquisition processing unit 71, a travel processing unit 72, a spray processing unit 73, a discrimination processing unit 74, a recovery processing unit 75, a determination processing unit 76, a re-recovery processing unit 77, and a display processing unit 78. In the present embodiment, as an example, the control device 7 mainly includes the computer system having one or more processors; therefore, the plurality of functional units (such as the acquisition processing unit 71) is implemented by the one or more processors executing a control program. The plurality of functional units included in the control device 7 may be dispersedly provided in a plurality of housings, or may be provided in one housing.

The control device 7 is configured so as to be communicable with a device provided in each unit of the base machine 10. That is, at least the traveling unit 11, the positioning device 2, the working machine 400 (sprayer 401 or weeder 402), the communication device 60, the user interface 61, the obstacle detection device 62, the power source 63, the indicator 65, the connection unit 80 and the like are connected to the control device 7. Consequently, the control device 7 can control the traveling unit 11, the working machine 400 and the like, and acquire electric signals from the positioning device 2, the communication device 60, the obstacle detection device 62 and the like. Furthermore, the control device 7 can also acquire an operation signal from the operation device 8 (wired device 81 and wireless device 82) connected to the connection unit 80. The control device 7 may exchange various types of information (data) directly with each device, or indirectly via a repeater and the like.

Specifically, the control device 7 can communicate with, for example, the client terminal 210 via the communication device 60. Consequently, the control device 7 can display various types of information on the display unit 211 of the client terminal 210 and can receive operation information of the operation unit 212 of the client terminal 210. That is, the control device 7 has a function as a display control unit that allows at least the display unit 211 of the client terminal 210 to display a display screen.

In addition to the above-described functional units, the control device 7 further includes an engine control unit, a hydro-static transmission (HST) control unit or the like that performs control regarding a hydrostatic continuously variable transmission. The engine control unit performs control regarding the engine (power source 63). The HST control unit performs control regarding the hydrostatic continuously variable transmission.

The acquisition processing unit 71 executes acquisition processing of acquiring an electric signal (including data) from each device. In the present embodiment, the acquisition processing unit 71 regularly or irregularly acquires the output of each sensor of the obstacle detection device 62, the attitude of the base machine 10 from the sensor device 66, and information (data) such as the remaining amount of the chemical solution as the spray substance and the remaining amount of the fuel. Furthermore, the acquisition processing unit 71 acquires the operation signals from the operation device 8 (wired device 81 and wireless device 82). Consequently, the control device 7 can acquire the operation signal corresponding to the operation of the operation device 8 by the acquisition processing unit 71. The acquisition processing unit 71 may directly acquire various data from various sensors and the like or may indirectly acquire various data via an electronic control unit and the like. The data acquired by the acquisition processing unit 71 is stored in, for example, a memory and the like.

The travel processing unit 72 performs automatic travel processing of allowing the base machine 10 to automatically travel along the target route in the agricultural field F1 on the basis of positioning information acquired from the positioning device 2. Specifically, the travel processing unit 72 allows the traveling unit 11 to automatically travel along the target route on the basis of positioning information including the position and orientation of the base machine 10 that are positioned by the positioning device 2. For example, when the positioning information enters an RTK positioning enabled state and the operator operates (for example, long presses) the operation unit 212 of the client terminal 210, the client terminal 210 outputs a travel start instruction (work start instruction) to the working vehicle 1. When acquiring the travel start instruction from the client terminal 210, the travel processing unit 72 starts the automatic travel of the working vehicle 1 on the basis of the positioning information of the base machine 10 positioned by the positioning device 2. Consequently, the working vehicle 1 starts automatic travel along the target route, and starts the work by the working machine 400.

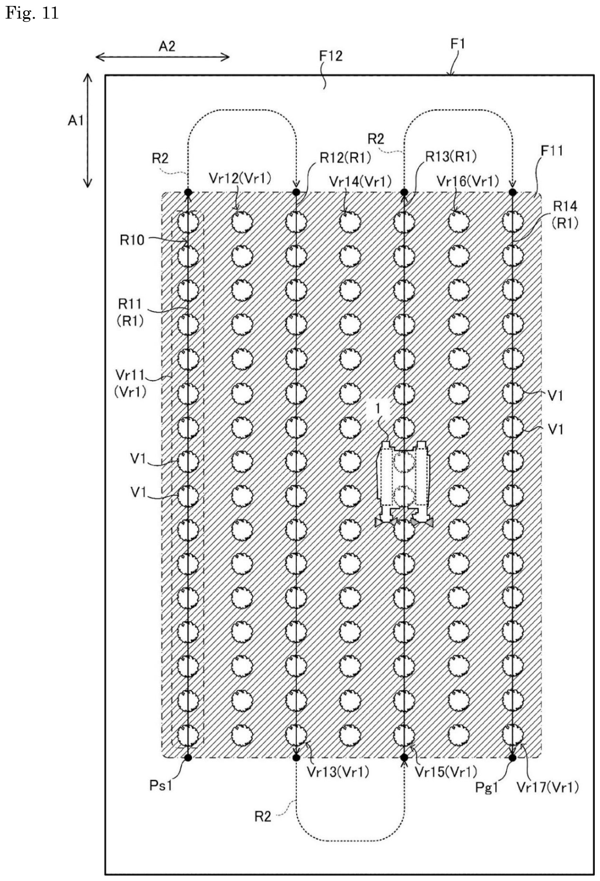

When the working vehicle 1 automatically travels along the target route R10 (refer to Fig. 11), the working vehicle 1 automatically travels on the travel route. In short, the travel processing unit 72 allows the working vehicle 1 to automatically travel on the travel route. The "travel route" referred to herein is a route through which the working vehicle 1 actually passes when the working vehicle 1 automatically travels in the agricultural field F1 (work field). That is, a travel locus of the working vehicle 1 when the working vehicle 1 automatically travels along the target route R10 is the "travel route". Here, the travel route may be common (identical) to the target route R10, or may be defined separately from the target route R10. As an example, when the working vehicle 1 automatically travels along the target route R10, in a case where the working vehicle 1 passes a position offset by 50 cm rightward from the target route R10, the "travel route" is formed at a position offset by 50 cm rightward from the target route R10. In the present embodiment, it is assumed that the travel route is common (identical) to the target route R10.

The target route R10 includes a plurality of work routes R1 (refer to Fig. 11), each of which is a linear route along which the working vehicle 1 performs work (spray work) on the crops V1 as the work targets (spraying targets). In other words, the travel processing unit 72 allows the working vehicle 1 to automatically travel along the work route R1.

Furthermore, the travel processing unit 72 performs manual travel processing of controlling the traveling unit 11 in accordance with the operation signal from the operation device 8 (wired device 81 and wireless device 82). That is, the control device 7 can control the traveling unit 11 in accordance with the operation of the operator on the operation device 8, that is, can perform manual operation of the traveling unit 11, by controlling the traveling unit 11 by the travel processing unit 72.

The spray processing unit 73 performs spray control processing regarding the work (spray work) of the sprayer 401. Specifically, when the working vehicle 1 starts automatic travel at the work start position, the spray processing unit 73 outputs, to the sprayer 401, a switching signal that switches a spray pattern on the basis of control information included in a predetermined target route. When receiving the switching signal, the sprayer 401 executes the spray work in a predetermined spray pattern.

The discrimination processing unit 74 discriminates whether a connected device connected to the connection unit 80 is the wired device 81 or the wireless device 82. The "connected device" referred to in the present disclosure is a device connected to the connection unit 80 of the working vehicle 1, that is, a device being connected to the working vehicle 1. In the present embodiment, as described above, since the wired device 81 or the wireless device 82 as the operation device 8 is alternatively selected and connected to the connection unit 80, the connected device is the operation device 8 and is either the wired device 81 or the wireless device 82.

When entering the target route R10 from an entry position of the target route R10, the recovery processing unit 75 performs recovery processing of allowing the working vehicle 1 to move (travel) to a recovery position in a case where a deviation including at least one of a position deviation and an orientation deviation of the working vehicle 1 with respect to the target route R10 exceeds a threshold. In the recovery processing, the recovery processing unit 75 further allows the working vehicle 1 that has reached the recovery position to move (travel) from the recovery position to the entry position of the target route R10. The "recovery position" referred to in the present disclosure is a position where the deviation (at least one of the position deviation and the orientation deviation) is reduced and entry from the entry position to the target route R10 can be started. That is, in a case where a deviation (deviation) of the working vehicle 1 with respect to the target route R10 is large, the working vehicle 1 is moved to the recovery position by the recovery processing, so that the working vehicle 1 can enter the target route R10 from the entry position with a reduced deviation.

In the recovery processing, the recovery processing unit 75 sets a recovery travel direction, which is the travel direction of the working vehicle 1 until reaching the target position, according to at least a positional relationship between an actual position and a next target position. The "travel direction" referred to in the present disclosure is a direction in which the base machine 10 of the working vehicle 1 is allowed to travel by the traveling unit 11, and includes forward movement and backward movement. That is, the recovery processing unit 75 selects and sets the recovery travel direction from "forward" and "backward" in the recovery processing.

The determination processing unit 76 performs determination processing of determining whether the working vehicle 1 protrudes from the agricultural field F1 (work field) when the working vehicle 1 moves to the recovery position. That is, since the working vehicle 1 might protrude from an outer peripheral edge (outer shape) of the agricultural field F1 in the middle of the recovery processing of moving the working vehicle 1 to the recovery position, the determination processing unit 76 determines the presence or absence of the protrusion. The determination processing unit 76 determines on the basis of information such as at least the outer peripheral edge of the agricultural field F1 registered in advance, the travel route of the working vehicle 1 to the recovery position in the recovery processing, and the size of the working vehicle 1.

The re-recovery processing unit 77 performs re-recovery processing. The re-recovery processing is processing of allowing the working vehicle 1 to move (travel) toward the recovery position in a case where the actual position of the working vehicle 1 deviates from the recovery position after the recovery processing and before the start of travel toward the entry position of the target route R10. That is, when the working vehicle 1 moves toward the recovery position by the recovery processing, for example, slip or the like occurs in the working vehicle 1 due to an influence of an inclined surface, a muddy surface, a step (including a depression) or the like of the agricultural field F1, for example, and the working vehicle 1 sometimes does not reach the recovery position as intended. In such a case, since the actual position of the working vehicle 1 deviates from the recovery position, the re-recovery processing is performed, and the working vehicle 1 can be moved to the recovery position again.

The display processing unit 78 displays various types of information on, for example, the display unit 211 of the client terminal 210, the display unit 611 of the user interface 61 or the like. The display processing unit 78 displays an operation screen when generating the target route R10, the generated target route R10, information regarding automatic travel (traveling situation, work situation and the like of the working vehicle 1) and the like on the display unit 211 (or the display unit 611).

### Specific configuration of sprayer

Next, a specific configuration of the sprayer 401 mounted on the base machine 10 as the working machine 400 will be described.

The sprayer 401 executes the spray work of spraying the chemical solution as the spray substance on the crop V1 as the spray target. The sprayer 401 includes, as illustrated in Fig. 10 and the like, a nozzle unit 4 and an airflow generating unit 5. The nozzle unit 4 includes the spray nozzle 41 and the like and discharges the chemical solution as the spray substance stored in the tank 64. The airflow generating unit 5 generates an airflow that conveys the spray substance (chemical solution) discharged from the nozzle unit 4.

The nozzle unit 4 and the airflow generating unit 5 are supported by the support frame 3. The support frame 3 is supported by the base machine 10, which means that the sprayer 401 including the nozzle unit 4 and the airflow generating unit 5 is indirectly supported by the base machine 10. In the present embodiment, since the support frame 3 is disposed at the rear end of the base machine 10, the nozzle unit 4 and the airflow generating unit 5 supported by the support frame 3 are also arranged at the rear end of the base machine 10.

The spray nozzle 41 of the nozzle unit 4 is a part supported by the support frame 3 for discharging (spraying) the spray substance. In the present embodiment, as an example, the spray nozzle 41 is a discharge port (spray unit) that actually serves as an outlet for the spray substance (chemical solution). The sprayer 401 includes a plurality of (for example, 12 in the present embodiment) spray nozzles 41.

The nozzle unit 4 includes a spray pipe 42, a pump 43 (refer to Fig. 7), a valve 44 (refer to Fig. 7), spray piping and the like, in addition to the spray nozzles 41. In the present embodiment, the spray nozzles 41 are attached to the spray pipe 42. The spray pipe 42 is connected by the spray piping to the pump 43 via the valve 44. The pump 43 pressure feeds, to the spray pipe 42, the spray substance (chemical solution) stored in the tank 64. The valve 44 is an electronically controlled valve unit such as an electromagnetic valve, and changes a pressure (spray pressure), a spray pattern and the like when spraying the spray substance. Consequently, the chemical solution in the tank 64 is supplied by the pump 43 to the spray nozzles 41 through the valve 44 and the spray pipe 42, and is discharged from the spray nozzles 41. Here, atomized chemical solution is discharged (sprayed) from the spray nozzles 41.

More specifically, as illustrated in Figs. 9 and 10, the spray pipe 42 is piping that is long in the up-and-down direction D1, and two spray pipes 42 are attached to each of the vertical frame 3L and the vertical frame 3R of the support frame 3. That is, in the present embodiment, the nozzle unit 4 includes four spray pipes 42 in total. The two (a pair of) spray pipes 42 attached to each of the vertical frame 3L and the vertical frame 3R are arranged side by side in the left-and-right direction D2. Each of the spray pipes 42 allows the chemical solution as the spray substance injected from an upper end thereof to flow down the pipe and discharges the chemical solution from three spray nozzles 41. Three spray nozzles 41 are attached to each of the spray pipes 42, so that the nozzle unit 4 includes 12 spray nozzles 41 in total.

Each of the spray nozzles 41 is attached to a corresponding spray pipe 42 in such a manner that the position can be changed in the up-and-down direction D1. Consequently, each of the spray nozzles 41 can change an interval from an adjacent spray nozzle 41 and a height position relative to the spray pipe 42 according to the spray target (crop V1). Each of the spray nozzles 41 is attached in such a manner that the position and direction (angle) thereof in the up-and-down direction D1 and the left-and-right direction D2 relative to the base machine 10 can be changed according to the spray target. Note that, in the sprayer 401, the number and the like of the spray nozzles 41 provided on each of the spray pipes 42 can be changed as appropriate according to the type of the spray target (crop V1), the length of each of the spray pipes 42 and the like.

The airflow generating unit 5 generates an airflow that conveys the spray substance (chemical solution) discharged from the spray nozzles 41. The airflow generating unit 5, together with the spray nozzles 41, is supported by the support frame 3. That is, in the present embodiment, the sprayer 401 is an air-assisted sprayer that sprays the spray substance (chemical solution) by means of the airflow generated by the airflow generating unit 5. Consequently, the working vehicle 1 can efficiently spray the spray substance (chemical solution) also on the spray target (crop V1) positioned relatively far from the spray nozzles 41.

The airflow generating unit 5 includes a duct 51 and a blower 52. The duct 51 forms a flow path through which air is allowed to flow in the up-and-down direction D1. The blower 52 allows air to flow in the duct 51. In the airflow generating unit 5, air blown out from a blow-out hole 511 (refer to Fig. 10) formed in the duct 51 forms an airflow. In short, the airflow generating unit 5 blows out the air that is sent to the duct 51 by the blower 52 from the blow-out hole 511 through the flow path in the duct 51, thereby generating a flow of air (airflow) flowing outward from the blow-out hole 511. According to this configuration, a stable airflow can be generated over a relatively wide area. Furthermore, the airflow generating unit 5 can adjust the volume of airflow under control of the blower 52. The airflow generating unit 5 can adjust a conveyance distance of the spray substance by adjusting the volume of air, and can convey the spray substance farther as the volume of air increases. Therefore, the working vehicle 1 according to the present embodiment can adjust a spray area of the spray substance by the sprayer 401.

More specifically, the duct 51 is piping that is long in the up-and-down direction D1, and one duct 51 is attached to each of the vertical frame 3L and the vertical frame 3R of the support frame 3. That is, in the present embodiment, the airflow generating unit 5 includes two ducts 51 in total. In each duct 51, on each of a left side surface and a right side surface of the duct 51, a plurality of blow-out holes 511 is formed in a line in the up-and-down direction D1. Furthermore, two spray pipes 42 of the nozzle unit 4 are fixed behind each duct 51.

Here, the duct 51, the two spray pipes 42 attached to the same, and a total of six spray nozzles 41 attached to the two spray pipes 42 are arranged symmetrically in the left-and-right direction D2. Three spray nozzles 41 provided on the left spray pipe 42, out of the two spray pipes 42, discharge the spray substance (chemical solution) toward the left front, and three spray nozzles 41 provided on the right spray pipe 42 discharge the spray substance (chemical solution) toward the right front. Therefore, the atomized spray substance discharged from the left spray nozzles 41 is conveyed leftward on the airflow blown leftward from the duct 51, and the atomized spray substance discharged from the right spray nozzles 41 is conveyed rightward on the airflow blown rightward from the duct 51.

Therefore, out of the plurality of (12) spray nozzles 41, three spray nozzles 41 provided on the leftmost spray pipe 42 spray the chemical solution leftward onto the crops V1 located outward of and to the left of the base machine 10. Out of the plurality of spray nozzles 41, three spray nozzles 41 provided on the left inner spray pipe 42 adjacent to the leftmost spray pipe 42 spray the chemical solution rightward onto the crops V1 located in the space Sp1 inside the base machine 10. Out of the plurality of spray nozzles 41, three spray nozzles 41 provided on the rightmost spray pipe 42 spray the chemical solution rightward onto the crops V1 located outward of and to the right of the base machine 10. Out of the plurality of spray nozzles 41, three spray nozzles 41 provided on the right inner spray pipe 42 adjacent to the rightmost spray pipe 42 spray the chemical solution leftward onto the crops V1 located in the space Sp1 inside the base machine 10.

With the above-described configuration, in the sprayer 401, the two spray pipes 42 and the six spray nozzles 41, which are provided on the vertical frame 3L of the support frame 3, function as a left spray unit. The two spray pipes 42 and the six spray nozzles 41, which are provided on the vertical frame 3R of the support frame 3, function as a right spray unit. The pair of left and right spray units is arranged behind the base machine 10, with an interval (space Sp1) to allow the crops V1 to pass therebetween in such a manner as to be able to spray in the left-and-right direction D2.

The sprayer 401 in which the plurality of (12) spray nozzles 41 is divided into a plurality of systems is configured to be controllable on a system-by-system basis. In the present embodiment, as an example, the six spray nozzles 41 provided on inner two spray pipes 42 in the left-and-right direction D2 out of the four spray pipes 42 are classified as a first system, the three spray nozzles 41 provided on the leftmost spray pipe 42 are classified as a second system, and the three spray nozzles 41 provided on the rightmost spray pipe 42 are classified as a third system. Therefore, the spray patterns by the sprayer 401 include a full spray pattern in which the spray substance (chemical solution) is sprayed from all the spray nozzles 41, and a limited spray pattern in which the spray direction is limited. The limited spray pattern includes a first spray pattern in which only the six spray nozzles 41 of the first system perform spraying, a second spray pattern in which only the three spray nozzles 41 of the second system perform spraying, and a third spray pattern in which only the three spray nozzles 41 of the third system perform spraying. Furthermore, the limited spray pattern includes a fourth spray pattern in which only nine spray nozzles 41 of the first and second systems perform spraying, a fifth spray pattern in which only nine spray nozzles 41 of the first and third systems perform spraying, and a sixth spray pattern in which only six spray nozzles 41 of the second and third systems perform spraying.

The sprayer 401 is controlled by the control device 7, and the above-described plurality of spray patterns (a total of seven patterns including the full spray pattern and the six limited spray patterns) is switched as appropriate. At least the valves 44 of the nozzle unit 4 are provided for each system of the plurality of spray nozzles 41, and in the present embodiment, three valves 44 are provided so as to correspond to the three systems (the first system, the second system, and the third system), respectively. The plurality of (here, three) valves 44 is (are) individually controlled by the control device 7 to change the spray pattern. The sprayer 401 can change the spray area of the spray substance also by changing the pressure (spray pressure) when spraying the spray substance on a system-by-system basis. Furthermore, in the present embodiment, the spray area of the spray substance can be adjusted also by adjusting the volume of air of the airflow generating unit 5, so that more various spray areas can be implemented according to the spray targets (crops V1) or the spray substance (chemical solution).

In the present embodiment, as described above, the support frame 3 is not relatively fixed to the base machine 10, but is configured to be rotatable about the rotation axis Ax1. When the support frame 3 rotates, the sprayer 401 supported by the support frame 3 also rotates about the rotation axis Ax1.

The working vehicle 1 according to the present embodiment does not include an actuator or the like that actively rotates the support frame 3. Therefore, the support frame 3 rotates only after an external force acts on the support frame 3. For example, when the base machine 10 travels on a horizontally inclined surface, the support frame 3 rotates by the weight of the support frame 3, that is, gravity acting on the support frame 3. Here, if the support frame 3 and the members (such as the sprayer 401) supported by the support frame 3 have a weight balance symmetrical in the left-and-right direction D2, the support frame 3 is maintained in a neutral position as long as the base machine 10 stays horizontal.

According to the rotatable support frame 3 described above, for example, while the base machine 10 is traveling on a horizontally inclined surface, the support frame 3 rotates, so that unevenness in the amount of the spray substance (chemical solution) sprayed by the sprayer 401 (uneven spraying) hardly occurs. In short, if the support frame 3 is fixedly supported by the base machine 10, the base machine 10 might tilt when traveling on a horizontally inclined surface. In this case, a distance from the spray nozzle 41 is different between an upper part and a lower part of the crop V1 (spray target) extending straight in the vertical direction from the ground (agricultural field F1), and the amount of the spray substance sprayed might be uneven. In contrast, when the support frame 3 rotates, the working vehicle 1 according to the embodiment can maintain the support frame 3, the spray nozzles 41 supported by the support frame 3 and the like in the same attitudes as when traveling on a horizontal plane. Therefore, the distance from the spray nozzle 41 is less likely to vary between the upper part and the lower part of the crop V1 (spray target) extending straight in the vertical direction from the ground (agricultural field F1), so that the occurrence of unevenness in the amount of the spray substance sprayed is easily suppressed.

### [3] Control method of working vehicle

A method of controlling the working vehicle 1, which is mainly executed by the control device 7, (hereinafter simply referred to as the "control method") is described below with reference to Figs. 11 to 22.

Since the working vehicle 1 is an example of a working machine, this control method is an example of a "working machine control method". Among these control methods, a control method related to automatic travel of the working vehicle 1 is particularly also referred to as a "travel control method of the working vehicle 1". That is, the control method according to the present embodiment includes a travel control method of the working vehicle 1.

Since the control method according to the present embodiment is executed by the control device 7 mainly including a computer system, in other words, the control method is embodied by a working vehicle control program (hereinafter, simply referred to as a "control program"). That is, the control program according to the present embodiment is a computer program for allowing one or more processors to execute each type of processing related to the control method. Such control program may also be executed in cooperation with, for example, the control device 7, the client terminal 210 and the like. Among the control programs, a program that allows one or more processors to execute each processing related to the travel control method of the working vehicle 1 is also referred to as a "travel control program".

The control device 7 that executes the control method forms a control system 100 as illustrated in Fig. 5. The control system 100 is a system that executes control related to travel of the working vehicle 1. In other words, the control system 100 according to the present embodiment is used for controlling the working vehicle 1 that works while moving in the agricultural field F1 (work field) in which a plurality of crop rows Vr1 (work target rows) including a plurality of crops V1 (work targets) is arranged. Furthermore, a part of the control system 100 that executes control (travel control) related to travel of the working vehicle 1 is an example of a "travel control system".

As described above, the control system 100 according to the present embodiment includes the control device 7 including the acquisition processing unit 71, the travel processing unit 72, the spray processing unit 73, the discrimination processing unit 74, the recovery processing unit 75, the determination processing unit 76, the re-recovery processing unit 77, and the display processing unit 78. The control device 7 is mounted on the base machine 10 of the working vehicle 1 and is a part of the components of the working vehicle 1. Therefore, the control system 100 forms the working vehicle 1 together with the base machine 10 including the traveling unit 11. In other words, the working vehicle 1 according to the present embodiment includes the control system 100 (travel control system) and the base machine 10. The base machine 10 is controlled by the control system 100.

### Basic operation

First, a basic operation when the travel processing unit 72 executes the automatic travel processing, so that the working vehicle 1 automatically travels in the agricultural field F1 as a work field will be described. Here, a case where the sprayer 401 is mounted on the base machine 10 of the working vehicle 1 as the working machine 400 and the working vehicle 1 executes the spray work is assumed.

The travel processing unit 72 starts automatic travel of the working vehicle 1 when the acquisition processing unit 71 acquires an automatic travel start instruction in a state in which a predetermined automatic travel condition is satisfied. The automatic travel condition includes, for example, that the target route R10 is set, that a key switch (engine key switch) for starting an engine (power source 63) of the working vehicle 1 is in an ON state, and that the working vehicle 1 is located at a work start position Ps1 (refer to Fig. 11). That is, when the working vehicle 1 is moved to the work start position Ps1 on the target route R10 by manual operation by the operation device 8 in a state in which the target route R10 is set and the engine is operated, the automatic travel condition is satisfied. In this state, for example, when the operator operates the operation unit 212 of the client terminal 210 and the automatic travel start instruction is output from the client terminal 210 to the working vehicle 1, the travel processing unit 72 starts automatic travel of the working vehicle 1.

Here, as an example, as illustrated in Fig. 11, the agricultural field F1 in which there are seven crop rows Vr11 to Vr17 is assumed as the work field. The agricultural field F1 includes a work area F11 (shaded area in Fig. 11) in which the crop rows Vr11 to Vr17 are formed, and a non-work area F12 as a headland area formed around the work area F11 so as to surround the work area F11. The work area F11 is an area in the agricultural field F1 in which work (here, spray work) by the working vehicle 1 is performed. The non-work area F12 is an area in which work (here, spray work) by the working vehicle 1 is not performed. That is, the work field (agricultural field F1) includes the work area F11 in which the working vehicle 1 performs work and the non-work area F12 in which the working vehicle 1 does not perform work.

The working vehicle 1 can travel automatically (autonomously) along the target route R10 set in advance in such agricultural field F1. For example, the working vehicle 1 travels automatically along the target route R10 including a plurality of work routes R1 and a plurality of moving routes R2 from the work start position Ps1 to a work end position Pg1. Each of the plurality of work routes R1 is a straight route on which the working vehicle 1 performs the work (spray work) on the crop V1 being the work target (spray target), and each of the plurality of moving routes R2 is a route on which the working vehicle 1 moves between the crop rows Vr1 without performing the spray work (non-work route), and may include a turning route and a straight route.

In the example of Fig. 11, the target route R10 includes four work routes R11 to R14 formed in the longitudinal direction A1, which is the longitudinal direction of the crop row Vr1 (that is, the direction in which the plurality of crops V1 is arranged) in the work area F11. Here, as an example, the work route R11 is set on the crop row Vr11, the work route R12 is set on the crop row Vr13, the work route R13 is set on the crop row Vr15, and the work route R14 is set on the crop row Vr17. The moving route R2 is formed so as to connect the work routes R11 to R14 adjacent in the width direction A2 in the non-work area F12 located on both sides in the longitudinal direction A1 as seen from the work area F11. That is, basically, out of the target route R10, the work route R1 is formed in the work area F11 in the work field (agricultural field F1), and the moving route R2 is formed in the non-work area F12.

According to the target route R10 described above, the working vehicle 1 travels in the work area F11 from the work start position Ps1 toward one side (upper side in Fig. 11) in the longitudinal direction A1 along the work route R11, and then travels in the non-work area F12 toward a start end of a next work route R12 along the moving route R2. Then, the working vehicle 1 travels in the work area F11 toward the other side (lower side in Fig. 11) in the longitudinal direction A1 along the work route R12, and then travels in the non-work area F12 toward a start end of a next work route R13 along the moving route R2. Then, the working vehicle 1 travels in the work area F11 toward one side in the longitudinal direction A1 along the work route R13, and then travels in the non-work area F12 toward a start end of a next work route R14 along the moving route R2. Finally, the working vehicle 1 travels in the work area F11 to the work end position Pg1 toward the other side in the longitudinal direction A1 along the work route R14.

Here, it is assumed that the current position of the working vehicle 1 is specified by the position of the antenna 21 arranged at the center in the left-and-right direction D2 in the rear part of the base machine 10 in plan view. Therefore, when the working vehicle 1 automatically travels along the target route R10, the center of the rear part of the base machine 10 in the left-and-right direction D2 passes on the target route R10. Consequently, the travel route on which the working vehicle 1 actually automatically travels coincides with the target route R10. Furthermore, as described above, the working vehicle 1 sprays, while traveling in an attitude in which the portal frame-shaped base machine 10 straddles one crop row Vr1, the spray substance (chemical solution) from the sprayer 401 on the crops V1 in the crop row Vr1 and the crops V1 in the crop rows Vr1 adjacent to the crop row Vr1. The current position of the working vehicle 1 may be specified from the position of the antenna 22 arranged at the front part of the base machine 10, or may be specified from the positions of both the antennas 21 and 22.

Therefore, for example, as illustrated in Fig. 11, while the working vehicle 1 is traveling on the work route R13 set on the crop row Vr15, the base machine 10 travels while straddling the crop row Vr15. At that time, the first block 10L travels on the working passage between the crop row Vr14 and the crop row Vr15, and the second block 10R travels on the working passage between the crop row Vr15 and the crop row Vr16. Furthermore, at that time, the working vehicle 1 can simultaneously spray the spray substance (chemical solution) on the crops V1 in the crop row Vr15, the crops V1 in the crop row Vr14 located on the left side, and the crops V1 in the crop row Vr16 located on the right side.

The working vehicle 1 travels automatically in a predetermined order of rows. In the example of Fig. 11, the work route R1 is set in every other row in the arrangement order of the crop rows Vr1, such as the crop rows Vr11, Vr13, Vr15, and Vr17. Therefore, the working vehicle 1 automatically travels along the plurality of crop rows Vr1 every other row. The working vehicle 1 can perform the spray work on all the spray targets by simultaneously spraying the spray substance (chemical solution) on the spray target (crops V1) in three rows adjacent in the width direction A2 while traveling along the plurality of crop rows Vr1 every other row. Note that, such setting of the work route R1 is merely an example, and the working vehicle 1 may travel every other row or every plural rows in the arrangement order of the crop rows Vr1.

Here, the working vehicle 1 performs the spray work while traveling on the work route R1, and does not perform the spray work while traveling on the moving route R2. Therefore, the working vehicle 1 starts the spray work when starting traveling on the work route R1, and stops the spray work when traveling on the work route R1 to the end. The working vehicle 1 travels on the moving route R2 while stopping the spray work, and resumes the spray work when reaching the start end of the next work route R1. Consequently, the working vehicle 1 performs the spray work while traveling in the work area F11, and does not perform the spray work while traveling in the non-work area F12.

In the example of Fig. 11, the moving route R2 includes the turning route for the right turn or left turn in gentle turning, but a turning mode for changing the orientation of the working vehicle 1 is not limited to the "gentle turn" and may include "pivot turn" and "spin turn", for example. Furthermore, the turning mode of the working vehicle 1 may include the turning mode of allowing the base machine 10 to turn while switching between forward movement and backward movement in order to enable turn of the base machine 10 within a limited space, such as a so-called "fishtail turn".

The target route R10 is generated on the basis of, for example, information such as working vehicle information regarding the working vehicle 1, agricultural field information regarding the agricultural field F1, and work information regarding work (here, spray work). The working vehicle information includes, for example, information such as a model of the working vehicle 1, a position of the antenna 21 of the working vehicle 1, a type of the working machine 400 (herein, the sprayer 401), a size and a shape of the working machine 400, a position of the working machine 400 with respect to the base machine 10, and a vehicle speed and an engine speed of the base machine 10 during work. The agricultural field information includes information such as a position and a shape of the agricultural field F1, the work start position Ps1, the work end position Pg1, and a work direction. The work direction herein used means a direction in which the working vehicle 1 is allowed to travel while performing the spray work in the work area F11 obtained by excluding the non-work area F12 such as the headland from the agricultural field F1. The work information includes information such as the number of skips, which is the number of work routes R1 to be skipped in a case where the working vehicle 1 turns in the non-work area F12, and the width of the non-work area F12.

The working vehicle information, the agricultural field information, the work information and the like may be manually set, for example, by the operator performing an operation of registering on the client terminal 210. Alternatively, for example, the information of the position, the shape and the like of the agricultural field F1 can be automatically acquired when the operator allows the working vehicle 1 to travel around the outer periphery of the agricultural field F1 by manual operation and records a transition of the position information of the antenna 21 at that time.

The generated target route R10 is stored in a memory (storage unit) of the control device of the working vehicle 1 and used for automatic travel by the travel processing unit 72. The target route R10 can also be displayed on the display unit 211 and the like of the client terminal 210.

### Regarding manual travel

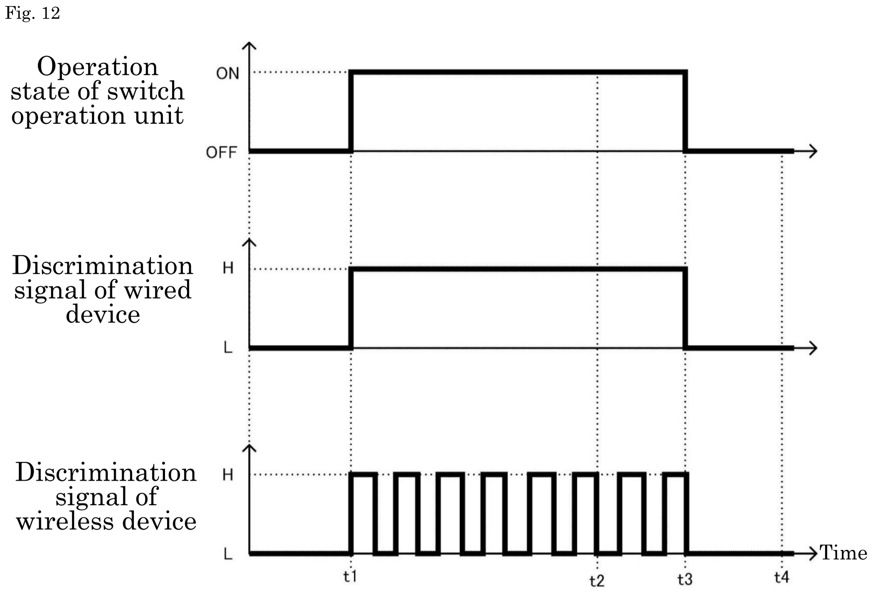

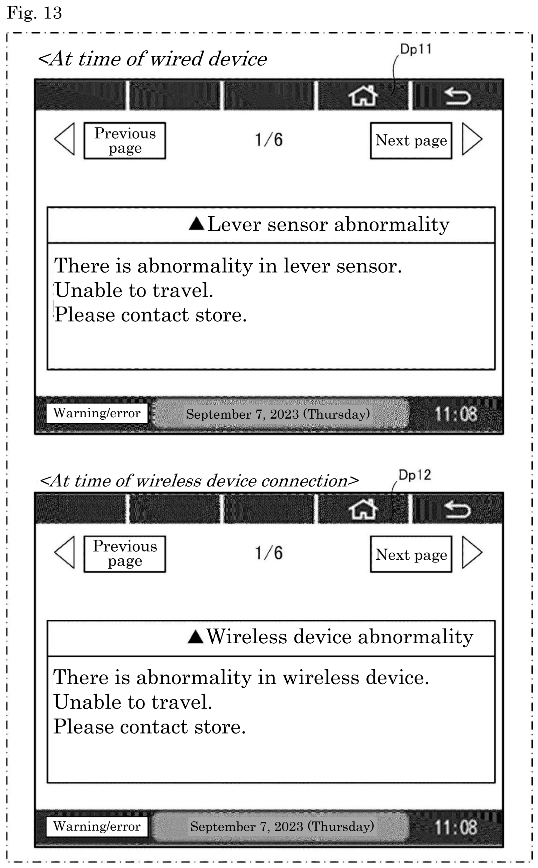

Next, a control method related to manual travel in which the travel processing unit 72 allows the working vehicle 1 to travel in accordance with the operation of the operation device 8 by the operator will be described with reference to Figs. 12 and 13.

That is, the control method according to the present embodiment includes processing for interrupting (stopping) the automatic travel processing of the working vehicle 1 and allowing the working vehicle 1 to manually travel according to the operation of the operation device 8. As an example, in a case where the remaining amount of the chemical solution as the spray substance falls below a threshold, or in a case where the remaining amount of the fuel falls below a threshold, it is necessary for the operator to stop the automatic travel processing and supply the spray substance (chemical solution) or the fuel. When loading or unloading the working vehicle 1 onto or from a transport vehicle also, the operator needs to manually operate the working vehicle 1 in a safe place outside the base machine 10. Therefore, in a case where the operator needs to manually operate the working vehicle 1 as described above, the automatic travel processing of the working vehicle 1 is interrupted (stopped), and "manual travel" in which the operator manually operates and moves the working vehicle 1 to, for example, a supply position and the like set around the agricultural field F1 is enabled.

In a case where the manual travel is performed, the travel processing unit 72 executes the manual travel processing of controlling the traveling unit 11 in accordance with the operation signal from the operation device 8 acquired by the acquisition processing unit 71. In the control method according to the present embodiment, as an example, manual travel is started when the switch operation unit 803 of the operation device 8 is pressed (long pressed) for a certain period of time or longer. That is, when the switch operation unit 803 for enabling the manual travel mode is long pressed, the manual travel is started.

In the present embodiment, as described above, the operation device 8 used for manual travel is the wired device 81 or the wireless device 82 connected to the connection unit 80. That is, by making two types of devices including the wired device 81 and the wireless device 82 connectable to the working vehicle 1 using a single connection unit 80, either the wired device 81 or the wireless device 82 can be used as the operation device 8.

That is, the working vehicle 1 (working machine) according to the present embodiment is the working vehicle 1 (working machine) that performs work in the agricultural field F1 (work field), and includes the control device 7 and the connection unit 80. The control device 7 controls the working vehicle 1 (working machine) by an operation signal from the operation device 8 including the wired device 81 or the wireless device 82. The connection unit 80 is a device for connecting the wired device 81 by wire. The connection unit 80 is configured to enable wired connection of the adapter 83 for receiving the operation signal transmitted from the wireless device 82 when the wireless device 82 is operated. As described above, by using the adapter 83, the connection unit 80 for connecting the wired device 81 can also be used for connecting the wireless device 82. Therefore, either the wired device 81 or the wireless device 82 can be used as the operation device 8 using the single connection unit 80.

Here, for example, appropriate setting might be different depending on whether the device connected to the working vehicle 1 is the wired device 81 or the wireless device 82. As an example, in a case of the operation device 8, for example, a calibration value (value such as "neutral position") for suppressing variation in control of the traveling unit 11 with respect to operations of the first travel operation unit 801, the second travel operation unit 802 and the like may be different between the wired device 81 and the wireless device 82. Therefore, it is conceivable that the user (operator) performs appropriate setting according to the device connected to the working vehicle 1, but this takes time and effort of the user. Therefore, in the control method according to the present embodiment, by adopting the configuration described below, a control method, a control program, and the control system 100 of the working machine (working vehicle 1), and the working machine (working vehicle 1) that can easily reduce time and effort of the user are implemented.

That is, the control method according to the present embodiment is the control method of the working vehicle 1 (working machine) including the connection unit 80, the working vehicle 1 that performs work in the agricultural field F1 (work field). The connection unit 80 can connect the wired device 81 by wire, and can connect the wireless device 82 via the adapter 83 in place of the wired device 81. The control method includes discriminating whether the connected device connected to the connection unit 80 is the wired device 81 or the wireless device 82.

That is, the discrimination processing unit 74 of the control device 7 automatically discriminates whether the connected device (the operation device 8 in the present embodiment) connected to the connection unit 80 is the wired device 81 or the wireless device 82. Therefore, the user (operator) only needs to connect either the wired device 81 or the wireless device 82 to the connection unit 80 and does not need to set whether the connected device is the wired device 81 or the wireless device 82, and it is easy to reduce time and effort of the user.

In the present embodiment, the wired device 81 and the wireless device 82 are the operation devices 8 for operating the working vehicle 1 (working machine). Therefore, it is possible to use, as the operation device 8, one of the wired device 81 and the wireless device 82 that allows the operator to easily operate the working vehicle 1, for example, by using the single connection unit 80. As a result, operability of the working vehicle 1 is improved.

The connected device is discriminated on the basis of a discrimination signal input to the connection unit 80 when operating the wired device 81 or the wireless device 82. That is, the discrimination processing unit 74 discriminates the connected device on the basis of the discrimination signal input to the connection unit 80 according to an operation on the wired device 81 or the wireless device 82 as the operation device 8. The discrimination signal is a signal derived from the operation signal, and may be the operation signal itself or a signal included in the operation signal. Consequently, it is possible to discriminate the connected device by using a function (function of outputting a signal according to an operation) of the wired device 81 or the wireless device 82 as the operation device 8.

Specifically, as illustrated in Fig. 12, it is assumed that the discrimination signal input to the connection unit 80 is different between the wired device 81 and the wireless device 82 in a case where the switch operation unit 803 is operated. Fig. 12 illustrates an example of an operation state of the switch operation unit 803, a discrimination signal of (a case of) the wired device 81, and a discrimination signal of (a case of) the wireless device 82. Here, a case is assumed where the operator long presses the switch operation unit 803 in order to start manual travel.

The switch operation unit 803 is pressed from a time point t1 to a time point t3. At that time, if the connected device connected to the connection unit 80 as the operation device 8 is the wired device 81, a discrimination signal (operation signal) continuously at a high (H) level from the time point t1 to the time point t3 is input to the connection unit 80. In contrast, if the connected device connected to the connection unit 80 as the operation device 8 is the wireless device 82, a discrimination signal (operation signal) repeatedly set to the high (H) level and a low (L) level at a predetermined cycle from the time point t1 to the time point t3 is input to the connection unit 80.

At a time point t2 when a certain period of time has elapsed after operation start of the switch operation unit 803 (time point t1), the manual travel mode is enabled and manual travel can be performed. The discrimination processing unit 74 discriminates whether the connected device is the wired device 81 or the wireless device 82 on the basis of the discrimination signal (operation signal) acquired by the acquisition processing unit 71 from the time point t1 to the time point t2.

That is, as illustrated in Fig. 12, if the discrimination signal input from the time point t1 to the time point t2 is the signal continuously at the H level, the discrimination processing unit 74 discriminates that the connected device is the wired device 81. In contrast, if the discrimination signal input from the time point t1 to the time point t2 is a signal repeatedly set to the H level/L level at a predetermined cycle, the discrimination processing unit 74 discriminates that the connected device is the wired device 81. At a time point t4 when a predetermined time has elapsed from the time point t3, the control device 7 recognizes that the switch operation unit 803 is not operated (OFF) on the basis of the fact that the discrimination signal input from the time point t1 to the time point t2 is the signal continuously at the L level.

Here, the discrimination signal is generated by the adapter 83 at the time of operation on the wireless device 82. That is, the adapter 83 that has received the operation signal generated by the long press of the switch operation unit 803 in the wireless device 82 generates the discrimination signal repeatedly set to the H level/L level at a predetermined cycle as illustrated in Fig. 12 and outputs the same to the connection unit 80. Consequently, the operator does not distinguish operation contents depending on whether the operation device 8 is the wired device 81 or the wireless device 82, and the adapter 83 automatically generates the discrimination signal for discriminating between the wired device 81 and the wireless device 82.

Furthermore, the discrimination signal generated by the adapter 83 is preferably a signal that cannot be reproduced by operation of the wired device 81 by a person (operator). For example, in a case of the discrimination signal in which the H level/L level is repeated at a predetermined cycle as illustrated in Fig. 12, it is preferable to set a predetermined cycle to about 40 ms so that the discrimination signal is not generated regardless of how a person (operator) operates the switch operation unit 803 of the wired device 81. Consequently, it is possible to suppress erroneous discrimination between the wired device 81 and the wireless device 82 due to the operation of the operator. As for the operation unit (here, the switch operation unit 803) for the operation for generating the discrimination signal, for example, a restriction is provided in terms of a structure such as a button that is less likely to be continuously hit by limiting a rebound speed at the time of operation, so that the discrimination signal generated by the adapter 83 may be a signal that cannot be reproduced by the operation of the wired device 81 by the person (operator).

The operation on the operation device 8 for generating the discrimination signal includes a start operation for starting use of the operation device 8. In the present embodiment, when the switch operation unit 803 of the operation device 8 is pressed (long pressed) for a certain period of time or longer, manual travel using the operation device 8 is started, so that a long pressing operation of the switch operation unit 803 is an example of the "start operation". In this manner, since the discrimination signal for discriminating between the wired device 81 and the wireless device 82 is generated by the start operation, it is possible to discriminate between the wired device 81 and the wireless device 82 without forcing the operator to perform a special operation.

In the control method according to the present embodiment, a discrimination result of the connected device is maintained until a release condition is satisfied. That is, once the discrimination processing unit 74 discriminates whether the connected device is the wired device 81 or the wireless device 82 on the basis of the discrimination signal, the discrimination result is maintained, and the discrimination result is not reversed until the release condition is satisfied. Consequently, once the connected device is discriminated, it is possible to suppress the discrimination result of the wired device 81 and the wireless device 82 from being erroneously overridden due to, for example, an error of the connected device or an operation error of the operator.

As an example, the release condition includes restart of the working vehicle 1 (working machine). In the present embodiment, the discrimination processing unit 74 discriminates the connected device at the time of first start operation of the operation device 8 after the start (power on) of the working vehicle 1. Therefore, once it is determined whether the connected device is the wired device 81 or the wireless device 82, the discrimination result of the connected device is not changed at least until the power supply of the working vehicle 1 is turned off. Consequently, once the connected device is discriminated, it is possible to suppress the discrimination result of the wired device 81 and the wireless device 82 from being erroneously overridden due to, for example, an error of the connected device or an operation error of the operator until at least the working vehicle 1 is restarted.

In the present embodiment, the discrimination result of the connected device includes "undetermined" in addition to the wired device 81 and the wireless device 82. That is, the discrimination processing unit 74 includes the discrimination result of "undetermined" in addition to the discrimination result that the connected device is the wired device 81 or the connected device is the wireless device 82. Consequently, until the connected device is determined as the wired device 81 or the wireless device 82, the discrimination result of the connected device is undetermined, and the discrimination of the connected device can be continued.

More specifically, the discrimination processing unit 74 performs pre-discrimination, discriminates that the device is the wired device 81 (undetermined) in the pre-discrimination, and determines the discrimination result of the wired device 81 only in a case where the device is discriminated to be the wired device 81 in further discrimination processing. Similarly, the discrimination processing unit 74 performs pre-discrimination, discriminates that the device is the wireless device 82 (undetermined) in the pre-discrimination, and determines the discrimination result of the wireless device 82 only in a case where the device is discriminated to be the wireless device 82 in further discrimination processing. In a case where the device is discriminated to be the wireless device 82 in the discrimination processing after the device is discriminated to be the wired device 81 (undetermined) in the pre-discrimination, it transitions to a state of the wireless device 82 (undetermined). Similarly, in a case where the device is discriminated to be the wired device 81 in the discrimination processing after the device is discriminated to be the wireless device 82 (undetermined) in the pre-discrimination, it transitions to a state of the wired device 81 (undetermined).

In the present embodiment, the working vehicle 1 (working machine) is set according to the discrimination result of the connected device. That is, as described above, since the calibration values of the first travel operation unit 801, the second travel operation unit 802 and the like are different between the wired device 81 and the wireless device 82, the discrimination processing unit 74 sets the calibration value according to, for example, the discrimination result. Consequently, even if the user (operator) does not perform the setting according to the connected device, an appropriate setting is automatically performed according to the connected device, so that time and effort of the user are reduced.

Furthermore, in the present embodiment, when the operation device 8 is abnormal, the display processing unit 78 displays error screens Dp11 and Dp12 (refer to Fig. 13) on, for example, the display unit 211 of the client terminal 210, the display unit 611 of the user interface 61 or the like. Here, the display content (error code or the like) of the error screens Dp11 and Dp12 differs depending on whether the operation device 8 (connected device) is the wired device 81 or the wireless device 82. Therefore, the discrimination processing unit 74 also performs setting of the working vehicle 1 related to the error screens Dp11 and Dp12 according to the discrimination result of the connected device.

As an example, as illustrated in Fig. 13, "at the time of wired device connection" when the wired device 81 is connected to the connection unit 80, the display processing unit 78 displays the error screen Dp11 when the operation device 8 is abnormal. In contrast, "at the time of wireless device connection" when the wireless device 82 is connected to the connection unit 80, the display processing unit 78 displays the error screen Dp12 when the operation device 8 is abnormal.

In this manner, in the control method according to the present embodiment, the information displayed on the display unit 211 (or the display unit 611) or the like (error screens Dp11 and Dp12) varies depending on the discrimination result as to whether the connected device is the wired device 81 or the wireless device 82. Especially, by making the error screens Dp11 and Dp12 different depending on the connected device, correct information regarding abnormality of the operation device 8 is presented to the operator, and it becomes easy to take necessary measures.

In a case where the discrimination result by the discrimination processing unit 74 is "undetermined", when an abnormality of the operation device 8 is detected, the display processing unit 78 displays that the discrimination result of the connected device (operation device 8) is "undetermined". That is, when the discrimination result is "undetermined", an error screen different from a case where the discrimination result is determined as the wired device 81 or the wireless device 82 is displayed.

### Recovery processing

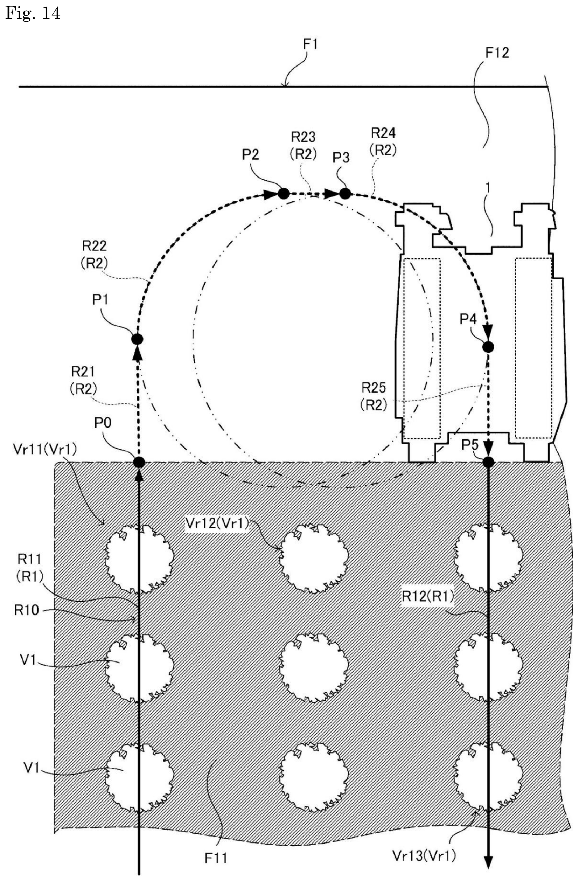

Next, the recovery processing mainly performed by the recovery processing unit 75 among the control method (travel control method) related to travel of the working vehicle 1 will be described with reference to Figs. 14 to 19.

That is, in the control method according to the present embodiment, by correcting the deviation including at least one of the position deviation and the orientation deviation of the working vehicle 1, even in a case where the working vehicle 1 deviates from the target route R10, the working vehicle 1 can be returned to the target route R10 and the automatic travel of the working vehicle 1 can be continued. Note that, in a case where the working vehicle 1 located at the position where the deviation from the target route R10 is found (the position where the deviation exceeds a threshold) is returned to (allowed to enter) the target route R10 from the entry position of the target route R10, the working vehicle 1 might not smoothly enter the target route R10 as it is.

Therefore, even in such a case, in order to allow the working vehicle 1 to smoothly enter the target route R10 from the entry position of the target route R10, the recovery processing unit 75 first sets the recovery position as a virtual target position on an extension of the entry position on the target route R10, and moves the working vehicle 1 to the recovery position. Consequently, the working vehicle 1 can smoothly enter (return to) the target route R10 from the entry position only by moving from the recovery position to the entry position of the target route R10 along the extension of the target route R10.

Specifically, in a case where the deviation including at least one of the position deviation and the orientation deviation of the working vehicle 1 with respect to the target route R10 exceeds a threshold, the recovery processing unit 75 performs the recovery processing (correction operation) of correcting the deviation. That is, in a case where the working vehicle 1 greatly deviates from the target route R10, the recovery processing unit 75 first moves the working vehicle 1 to the recovery position on the extension of the work route R1 of the target route R10 in order to return the working vehicle 1 from the entry position of the target route R10 to the target route R10. Consequently, the working vehicle 1 can move forward from the recovery position to the entry position of the target route R10 along the extension of the work route R1, and smoothly enter (return to) the target route R10 from the entry position.

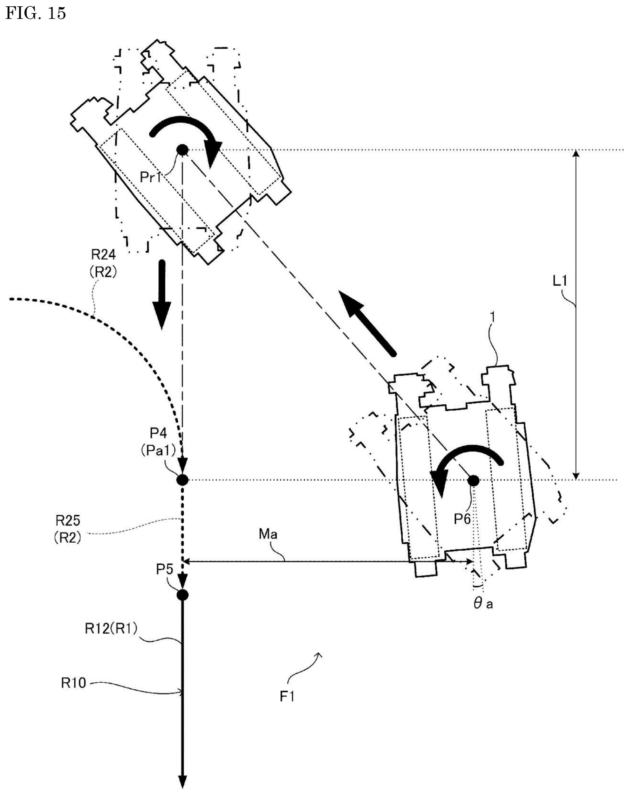

Hereinafter, basic recovery processing performed by the recovery processing unit 75 will be described with reference to Figs. 14 and 15.

Here, as illustrated in Fig. 14, a case is assumed that the travel processing unit 72 moves from the work route R11 of the crop row Vr11 to the work route R12 of the crop row Vr13 according to the target route R10. Here, an end position P0 of the work route R11 and a start position P5 of the work route R12 are connected by the moving route R2. The moving route R2 can be divided into a straight route R21, a turning route R22, a straight route R23, a turning route R24, and a straight route R25 in order from the work route R11 side. In other words, the moving route R2 includes the straight route R21, the turning route R22, the straight route R23, the turning route R24, and the straight route R25.

In the example of Fig. 14, the working vehicle 1 that automatically travels along the target route R10 performs work travel on the work route R11, and when reaching the end position P0 of the work route R11, the working vehicle 1 stops the work (spray work), travels straight on the straight route R21, and starts turning at the end position P1. When the working vehicle 1 starts turning, the working vehicle 1 moves on the turning route R22, the straight route R23, and the turning route R24, travels straight on the straight route R25 from the turn end position P4, and when reaching the start position P5 of the next work route R12, the working vehicle 1 resumes the work (spray work) and performs work travel on the work route R12. In

Fig. 14, the turning route R22 and the turning route R24 have the same turning radius.

While the working vehicle 1 automatically travels along the target route R10 as described above, the recovery processing unit 75 detects the deviation (position deviation and/or orientation deviation) of the working vehicle 1. Specifically, the recovery processing unit 75 detects the position deviation and orientation deviation of the working vehicle 1 with respect to the target route R10 on the basis of the positioning information (current position and current orientation) obtained by the positioning device 2. The position deviation is a horizontal deviation, that is, a deviation amount of the current position of the working vehicle 1 from the target route R10 in a direction orthogonal to the target route R10, and the orientation deviation is an orientation angle deviation, that is, a deviation amount in the travel direction (orientation) of the working vehicle 1 from the target route R10.

The recovery processing unit 75 determines whether the detected position deviation exceeds a preset threshold (position threshold). In a case where the position deviation exceeds the position threshold, the recovery processing unit 75 executes the recovery processing for correcting the position deviation. The recovery processing unit 75 determines whether the detected orientation deviation exceeds a preset threshold (orientation threshold). In a case where the orientation deviation exceeds the orientation threshold, the recovery processing unit 75 executes the recovery processing for correcting the orientation deviation. The position threshold and the orientation threshold are set in advance in the client terminal 210, for example. Each of the position threshold and the orientation threshold is an example of a "threshold" for the deviation.

In contrast, Fig. 15 illustrates a case where the working vehicle 1 deviates from the target route R10. Fig. 15 illustrates a part of the target route R10 including the turning route R24 and the straight route R25 illustrated in Fig. 14. Here, a case is assumed where the working vehicle 1 deviates from the turning route R24 of the target route R10, and position deviation Ma exceeds the position threshold and orientation deviation θa exceeds the orientation threshold at a position P6 of a distance Ma (position deviation) from the turn end position P4.

In this case, the recovery processing unit 75 sets a recovery position Pr1 as a virtual target position at a position on an extension of the straight route R25. At the position P6, the recovery processing unit 75 allows the working vehicle 1 to spin turn (spin turn) so that the back side is directed to the recovery position Pr1. Here, the recovery position Pr1 is a position at a distance L1 (for example, 2 m) from the turn end position P4 in the extension direction of the straight route R25.

Next, the recovery processing unit 75 moves the working vehicle 1 backward until the working vehicle 1 reaches the recovery position Pr1. At the recovery position Pr1, the recovery processing unit 75 allows the working vehicle 1 to spin turn (spin turn) until the orientation deviation of the working vehicle 1 with respect to the extension direction of the straight route R25 becomes equal to or smaller than the orientation threshold.

Consequently, the travel processing unit 72 can allow the working vehicle 1 to enter (return to) the target route R10 (straight route R25) from the turn end position P4 only by allowing the working vehicle 1 to move forward (straight) from the recovery position Pr1 to the turn end position P4 along the extension of the straight route R25. Thereafter, the travel processing unit 72 allows the working vehicle 1 to travel straight on the straight route R25 and enter the work route R12 from the start position P5. That is, in the example of Fig. 15, the turn end position P4 is an example of the "entry position" on the target route R10.

In the recovery processing as described above, the working vehicle 1 is moved in a direction away from the entry position of the target route R10 (toward the outside of the agricultural field F1), so that the working vehicle 1 can enter the target route R10 from the entry position. Therefore, since a relatively wide space (non-work area F12 as the headland area) is required in the outer peripheral portion of the agricultural field F1 (work field), there is a possibility that the agricultural field F1 (work field) in which the recovery processing can be performed is limited. Therefore, in the control method (travel control method) according to the present embodiment, by adopting the configuration described below, the travel control method, the travel control program, and the (travel) control system 100 of the working vehicle 1, and the working vehicle 1 that can easily alleviate the limitation of the agricultural field F1 (work field) in the recovery processing can be performed are implemented.

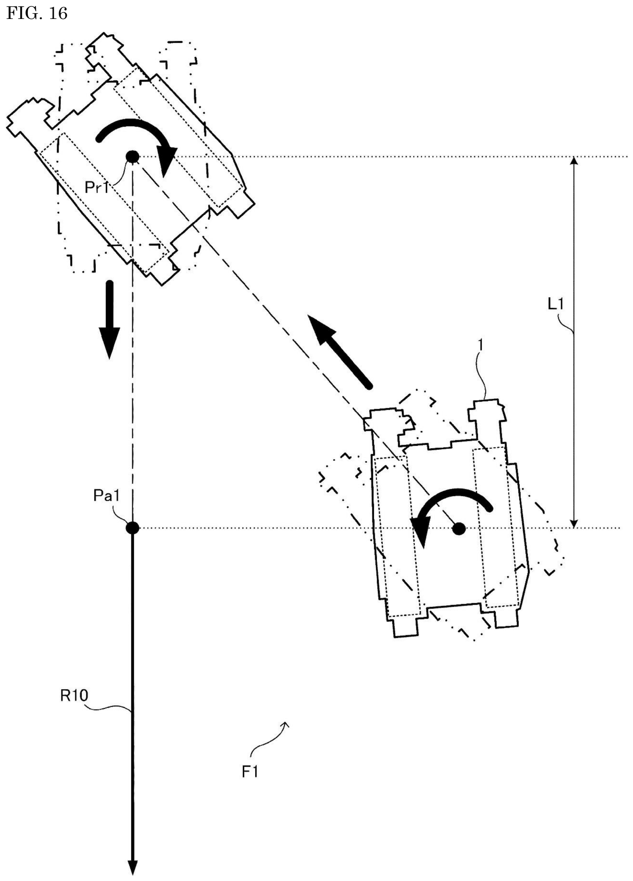

That is, the travel control method according to the present embodiment includes allowing the working vehicle 1 to automatically travel along the target route R10 in the agricultural field F1 (work field) and performing the recovery processing. The recovery processing is processing of moving the working vehicle 1 to the recovery position Pr1 in a case where the deviation including at least one of the position deviation and the orientation deviation of the working vehicle 1 with respect to the target route R10 exceeds a threshold when entering the target route R10 from the entry position Pa1 of the target route R10 as illustrated in Fig. 16. The recovery position Pr1 is a position where the deviation is reduced and entry (from the entry position Pa1) to the target route R10 can be started. In the recovery processing, the distance from the entry position Pa1 of the target route R10 to the recovery position Pr1 is designated as the recovery distance L1, and the recovery position Pr1 is determined according to the recovery distance L1.

That is, when executing the recovery processing of moving the working vehicle 1 to the recovery position Pr1, the recovery processing unit 75 of the control device 7 determines the recovery position Pr1 according to the recovery distance L1, which is the distance from the entry position Pa1 to the recovery position Pr1. Consequently, a distance by which the working vehicle 1 is moved backward from the entry position Pa1 to the recovery position Pr1 can be designated as the recovery distance L1. Therefore, for example, by designating the recovery distance L1 to be short, the recovery processing can be executed even in the agricultural field F1 (work field) having no margin in the space of the outer peripheral portion (the non-work area F12 as the headland area). As a result, according to the travel control method according to the present embodiment, it is easy to alleviate the limitation of the agricultural field F1 (work field) where the recovery processing can be performed.

In short, in the example of Fig. 15, by designating the recovery distance L1, the recovery position Pr1 is specified from the entry position Pa1 (turn end position P4) and the recovery distance L1. In the recovery processing, the recovery processing unit 75 moves the working vehicle 1 toward the recovery position Pr1 specified from the recovery distance L1 in this manner.

In the present embodiment, the recovery processing unit 75 designates the recovery distance L1 according to an operation of a user (operator). Consequently, for example, by making the recovery distance L1 short in the agricultural field F1 (work field) having no margin in the space of the outer peripheral portion (the non-work area F12 as the headland area) and the like, the recovery distance L1 can be flexibly designated according to the situation.

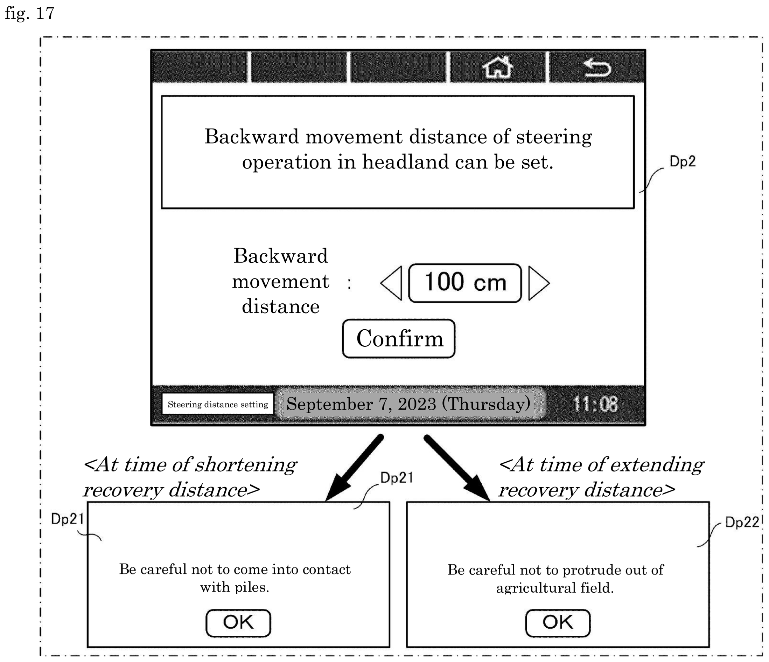

Specifically, an operation of setting the recovery distance L1 by the user (operator) is received on the recovery distance setting screen Dp2 as illustrated in Fig. 17. The recovery distance setting screen Dp2 is a screen displayed by the display processing unit 78 on, for example, the display unit 211 of the client terminal 210, the display unit 611 of the user interface 61 or the like.

On the recovery distance setting screen Dp2, for example, a message prompting the user (operator) to set the recovery distance L1 (backward travel distance) in the recovery processing (turnabout operation in the headland), such as "the backward travel distance of the turnabout operation in the headland can be set" is displayed. On the recovery distance setting screen Dp2, a "backward travel distance" (recovery distance L1) that can be changed by operating a cursor key is displayed. The recovery distance L1 can be set in increments of a predetermined length (for example, 10 cm) within a range from a lower limit value (for example, 20 cm) to an upper limit value (for example, 150 cm). The recovery distance L1 set on the recovery distance setting screen Dp2 is stored in a nonvolatile memory, and is held even when the power of the working vehicle 1 is turned off.

Furthermore, when the recovery distance L1 is changed from its previous value on the recovery distance setting screen Dp2, confirmation screens Dp21 and Dp22 are displayed as illustrated in Fig. 17. The confirmation screens Dp21 and Dp22 are popped up on the recovery distance setting screen Dp2 by the display processing unit 78, for example. Here, it is preferable that the confirmation screen Dp21 in a case where the recovery distance L1 is shortened and the confirmation screen Dp22 in a case where the recovery distance L1 is extended have different contents. In the example of Fig. 17, the confirmation screen Dp21 has the content for calling attention to contact with a pile located at an end of the crop row Vr1, whereas the confirmation screen Dp22 has the content for calling attention to protrusion from the agricultural field F1.

In the travel control method according to the present embodiment, the recovery distance L1 is not fixed to the value set by the user (operator) as described above, but the recovery distance L1 can be automatically changed. That is, the recovery processing unit 75 can change the recovery distance L1 by shortening or extending the recovery distance L1.

Here, the recovery processing unit 75 basically changes the recovery distance L1 before starting the recovery processing (moving the working vehicle 1 to the recovery position Pr1) so that the working vehicle 1 does not protrude from the agricultural field F1 (work field). That is, at the currently designated recovery distance L1, in a case where the recovery position Pr1 protrudes outside the agricultural field F1, the recovery processing unit 75 shortens the recovery distance L1 to prevent the working vehicle 1 from protruding from the agricultural field F1 in the recovery processing.

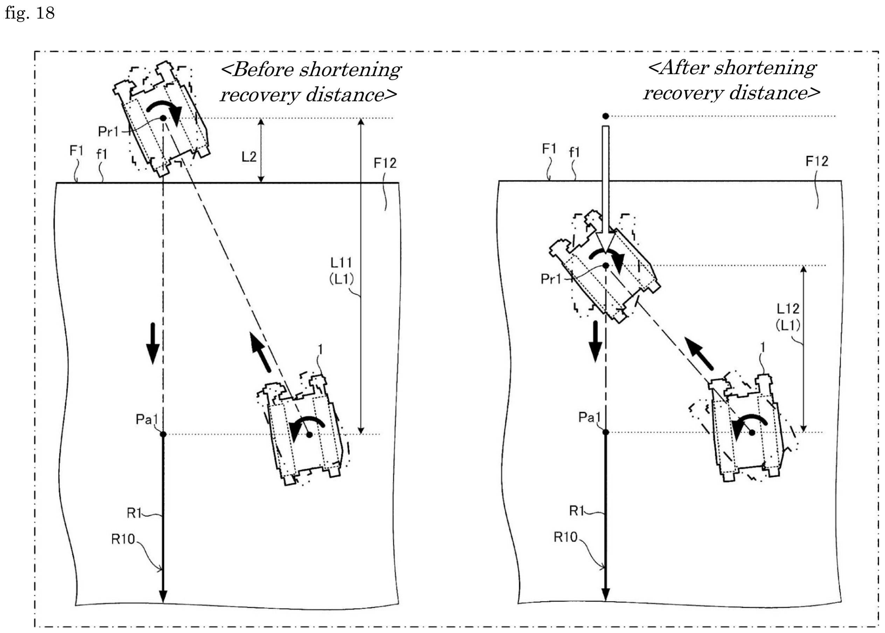

Therefore, first, in a case where the recovery position Pr1 is outside the agricultural field F1 (work field), the recovery distance L1 is shortened. That is, as illustrated on the left side of Fig. 18, in a case where the recovery distance L11 is too long with respect to the non-work area F12 as the headland area and the recovery position Pr1 is located outside the agricultural field F1, the recovery distance L12 is shortened as illustrated on the right side of Fig. 18 (L11 > L12). The recovery processing unit 75 specifies the recovery position Pr1 using the shortened recovery distance L12, and executes the recovery processing of moving the working vehicle 1 to the recovery position Pr1.

Consequently, by shortening the recovery distance L1, the recovery position Pr1 can be accommodated in the agricultural field F1, and the working vehicle 1 hardly protrudes from the agricultural field F1 during the recovery processing.

Furthermore, in this case, the recovery distance L1 is preferably shortened on the basis of a protrusion amount L2 of the recovery position Pr1 from an outer peripheral edge f1 of the agricultural field F1 (work field). In short, as illustrated on the left side of Fig. 18, in a case where the recovery position Pr1 is located outside the agricultural field F1 at the currently designated recovery distance L1, the recovery processing unit 75 determines a shortened amount of the recovery distance L1 according to the protrusion amount L2, which is the distance from the recovery position Pr1 to the outer peripheral edge f1 of the agricultural field F1.

Here, the recovery processing unit 75 increases the shortened amount of the recovery distance L1 as the protrusion amount L2 increases to shorten the recovery distance L1 after the shortening, and decreases the shortened amount of the recovery distance L1 as the protrusion amount L2 decreases to lengthen the recovery distance L1 after the shortening. Consequently, it is possible to suppress the recovery distance L1 from becoming shorter than necessary.

More preferably, the determination processing unit 76 determines whether the working vehicle 1 protrudes from the agricultural field F1 before the recovery processing unit 75 starts the recovery processing (moves the working vehicle 1 to the recovery position Pr1). In a case where the working vehicle 1 protrudes from the agricultural field F1 in the recovery processing, the recovery processing unit 75 shortens the recovery distance L1.

Specifically, the determination processing unit 76 determines whether the working vehicle 1 protrudes from the agricultural field F1 when the working vehicle 1 moves to the recovery position Pr1 in the recovery processing (backward movement) and when the working vehicle 1 turns (spin turns) at the recovery position Pr1. The determination processing unit 76 determines whether the working vehicle 1 protrudes from the agricultural field F1 according to whether a line segment connecting an end point of the base machine 10 and an expected stop position of the end point intersects the outer peripheral edge f1 of the agricultural field F1. In a case where it is determined to protrude from the agricultural field F1, the recovery processing unit 75 shortens the recovery distance L1 according to the protrusion amount. Furthermore, the determination processing unit 76 redetermines whether the working vehicle 1 protrudes from the agricultural field F1 in the recovery processing using the shortened recovery distance L1. As a result of the redetermination, the determination processing and the shortening of the recovery distance L1 are repeatedly executed until it is determined that the working vehicle 1 does not protrude from the agricultural field F1. Note that, when the recovery distance L1 reaches the lower limit value, the recovery processing is started with the recovery distance L1 as the lower limit value.

The travel control method according to the present embodiment further includes notifying in a case where the recovery position Pr1 is outside the agricultural field F1 (work field). That is, as illustrated on the left side of Fig. 18, in a case where the recovery position Pr1 is located outside the agricultural field F1 at the currently designated recovery distance L1, the recovery processing unit 75 performs notification by display, light, sound, or a combination thereof. Consequently, notification is performed according to the processing of shortening the recovery distance L1.

Furthermore, the recovery distance L1 is shortened within a range not falling below the lower limit value. In short, the lower limit value (20 cm as an example) is set for the recovery distance L1 as described above, and even in a case where the recovery processing unit 75 automatically shortens the recovery distance L1, the recovery distance L1 is shortened within a range not falling below the lower limit value. Therefore, it is possible to suppress the recovery distance L1 from becoming too short.

The target route R10 includes a plurality of work routes R1 each along the work target row (crop row Vr1). The recovery distance L1 is designated for each work route R1. Consequently, for example, even in a case where the distance from the end of the crop row Vr1 to the outer peripheral edge f1 of the agricultural field F1 is different for each work route R1, it is possible to set the recovery distance L1 suitable for each crop row Vr1 and as long as possible.

Furthermore, in the travel control method according to the present embodiment, protrusion of the working vehicle 1 from the agricultural field F1 (work field) is monitored even during execution of the recovery processing. That is, when the recovery processing unit 75 executes the recovery processing to move the working vehicle 1 to recovery position Pr1, the determination processing unit 76 determines whether the working vehicle 1 protrudes from the agricultural field F1.

Specifically, the determination processing unit 76 determines whether the working vehicle 1 protrudes from the agricultural field F1 according to whether the line segment connecting the end point of the base machine 10 and the expected stop position of the end point intersects the outer peripheral edge f1 of the agricultural field F1 during the execution of the recovery processing. If it is determined that the working vehicle 1 protrudes from the agricultural field F1 in the middle of the recovery processing (while the working vehicle 1 is moving to the recovery position Pr1), the recovery processing unit 75 stops the working vehicle 1 at that time and sets the stop position as the recovery position Pr1.

In short, in the present embodiment, when the working vehicle 1 protrudes from the agricultural field F1 (work field) in the middle of the recovery processing, the position of the working vehicle 1 at the time of the protrusion is set as the recovery position Pr1, and entry of the working vehicle 1 to the target route R10 is started. Consequently, it is possible to suppress the working vehicle 1 from greatly protruding from the agricultural field F1 in the middle of the recovery processing.

Furthermore, after stopping the working vehicle 1 and before starting the entry of the working vehicle 1 to the target route R10, the recovery processing unit 75 allows the working vehicle 1 to turn (spin turn) as necessary to direct the direction of the working vehicle 1 to the entry position Pa1. That is, in the recovery processing, the working vehicle 1 that has reached the recovery position Pr1 is turned toward the entry position Pa1 of the target route R10. Therefore, the working vehicle 1 can enter the target route R10 from the entry position Pa1 only by traveling straight (forward) from the recovery position Pr1.

Here, in the travel control method according to the present embodiment, it is determined whether the working vehicle 1 protrudes from the agricultural field F1 (work field) also when the working vehicle 1 turns from the recovery position Pr1. Therefore, even during the turn at the recovery position Pr1, it is possible to suppress the working vehicle 1 from greatly protruding from the agricultural field F1.

Especially, in the present embodiment, in a case where the working vehicle 1 protrudes from the agricultural field F1 (work field) when the working vehicle 1 turns from the recovery position Pr1, the turn of the working vehicle 1 is stopped, and the working vehicle 1 is moved forward or backward. Consequently, even during the turn at the recovery position Pr1, it is possible to suppress the working vehicle 1 from protruding from the agricultural field F1. Alternatively, it is possible to determine in advance whether the working vehicle 1 protrudes from the agricultural field F1 when the working vehicle 1 turns from the recovery position Pr1, for example, before the working vehicle 1 reaches the recovery position Pr1. In a case where the working vehicle 1 is expected to protrude from the agricultural field F1 when this turns, the recovery processing unit 75 may shorten the recovery distance L1 according to the protrusion amount.

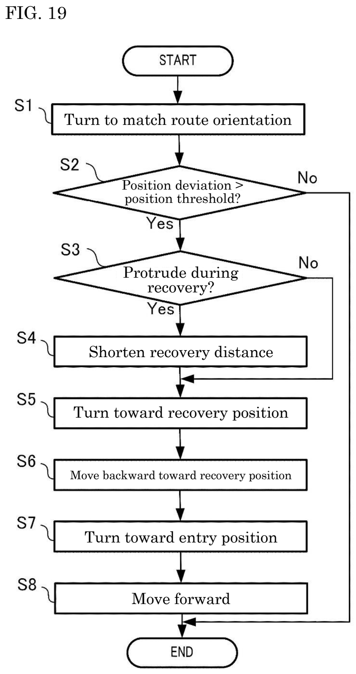

Fig. 19 is a flowchart illustrating an example of processing related to the recovery processing among the travel control method according to the present embodiment.

First, when the deviation including at least one of the position deviation and the orientation deviation exceeds a threshold, the recovery processing unit 75 stops the working vehicle 1 on the spot and then allows the working vehicle 1 to turn (spin turn) in such a manner as to reduce the orientation deviation, that is, to match the orientation of the target route R10 (S1).

The recovery processing unit 75 determines whether the position deviation exceeds the position threshold (S2), and if the position deviation is equal to or less than the position threshold (S2: No), this finishes a series of processing related to the recovery processing. In contrast, when the position deviation exceeds the position threshold (S2: Yes), the recovery processing unit 75 shifts the procedure to step S3.

At step S3, before actually moving the working vehicle 1 to the recovery position Pr1, in a case where the working vehicle 1 is moved backward to the recovery position Pr1 specified by the currently designated recovery distance L1, the recovery processing unit 75 determines whether the working vehicle 1 protrudes from the agricultural field F1. In this case, for example, when it is determined that the working vehicle 1 protrudes from the agricultural field F1, for example, the recovery position Pr1 is outside the agricultural field F1 (S3: Yes), the recovery processing unit 75 shortens the recovery distance L1 (S4). At that time, the recovery processing unit 75 shortens the recovery distance L1 on the basis of, for example, the protrusion amount of the working vehicle 1 from the outer peripheral edge f1 of the agricultural field F1. In contrast, when the working vehicle 1 does not protrude from the agricultural field F1 (S3: No), the recovery processing unit 75 skips step S4 and shifts the procedure to step S5.

At step S5, the recovery processing unit 75 allows the working vehicle 1 to turn (spin turn) toward the recovery position Pr1 specified from the recovery distance L1. The recovery processing unit 75 moves the working vehicle 1 backward toward the recovery position Pr1 until the working vehicle 1 reaches the recovery position Pr1 (S6). When the working vehicle 1 reaches the recovery position Pr1, the recovery processing unit 75 allows the working vehicle 1 to turn (spin turn) toward the entry position Pa1 of the target route R10 (S7).

Thereafter, the travel processing unit 72 moves the working vehicle 1 forward toward the entry position Pa1 to allow the working vehicle 1 to enter the target route R10 from the entry position Pa1 (S8).

The control system 100 repeatedly executes the processing at steps S1 to S8. Note that, the flowchart illustrated in Fig. 19 is merely an example, and processing may be added or omitted as appropriate, or the order of processing may be changed as appropriate.

### Setting processing of recovery travel direction

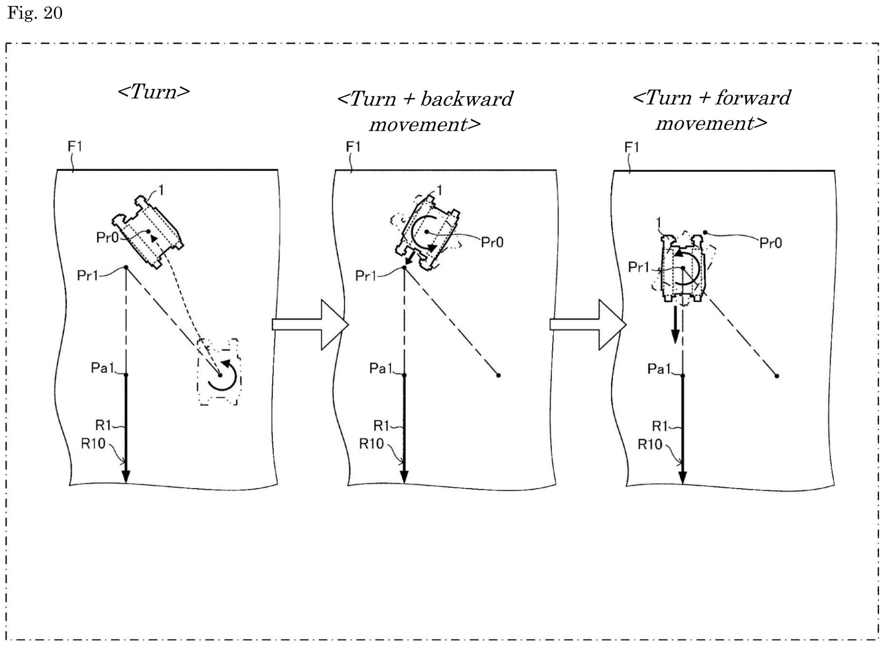

Next, setting processing of the recovery travel direction mainly performed by the recovery processing unit 75 among the control method (travel control method) related to the travel of the working vehicle 1 will be described with reference to Figs. 20 to 22.

In the recovery processing as described above, in order to move (backward) the working vehicle 1 toward the recovery position Pr1, the recovery processing unit 75 first allows the working vehicle 1 to spin turn (spin turn) so that the back side of the base machine 10 is directed to the recovery position Pr1. At that time, ideally, only the direction (orientation) is to be changed without changing the position of the working vehicle 1, but for example, there is a case where slip or the like occurs in the working vehicle 1 due to the influence of an inclined surface, a muddy surface, a step (including a depression) or the like of the agricultural field F1, so that it is difficult to turn on the spot, and the position of the working vehicle 1 significantly deviates (from the start position of the recovery processing) when this finishes turning. Especially, when the recovery distance L1 is short, the turning angle of the spin turn becomes large, so that a position deviation of the working vehicle 1 is likely to occur during the spin turn.

Similarly, when the working vehicle 1 reaches the recovery position Pr1, in order to move (forward) the working vehicle 1 toward the entry position Pa1 next, the recovery processing unit 75 allows the working vehicle 1 to spin turn (spin turn) so that the front side of the base machine 10 is directed to the entry position Pa1. At that time, ideally, only the direction (orientation) is to be changed without changing the position of the working vehicle 1, but for example, there is a case where slip or the like occurs in the working vehicle 1 due to the influence of an inclined surface, a muddy surface, a step (including a depression) or the like of the agricultural field F1, so that it is difficult to turn on the spot, and the position of the working vehicle 1 significantly deviates (from the recovery position Pr1) when this finishes turning.

Fig. 20 illustrates an example in which the position of the working vehicle 1 significantly deviates (from the start position of the recovery processing) when the working vehicle 1 is allowed to spin turn so that the back side of the base machine 10 is directed to the recovery position Pr1. As indicated by "turn" in Fig. 20, it is assumed that, as a result that the position of the working vehicle 1 significantly deviates at the time of first spin turn in the recovery processing, the working vehicle 1 moves past (passes by) the recovery position Pr1 while performing the spin turn, and the spin turn is completed at an actual position Pr0. When the working vehicle 1 at such actual position Pr0 is moved to the recovery position Pr1, in order to move the working vehicle 1 backward to the recovery position Pr1, it is necessary to reverse (turn) the direction of the working vehicle 1 by approximately 180 degrees, which is inefficient. That is, assuming that the working vehicle 1 is always moved backward toward the recovery position Pr1, in a case where the working vehicle 1 is located at the actual position Pr0 after moving past the recovery position Pr1 as illustrated in Fig. 20, the working vehicle 1 is turned in such a manner as to reverse the direction of the working vehicle 1 by approximately 180 degrees and then moved backward to the recovery position Pr1 (turn + backward movement). Furthermore, the working vehicle 1 that has reached the recovery position Pr1 is allowed to spin turn at the recovery position Pr1 in such a manner as to be reversed by approximately 180 degrees, and is moved forward toward the entry position Pa1 (turn + forward movement).

When the number of turns (spin turns) increases and the turning angle increases in this manner, the time required for turning increases and the agricultural field F1 is likely to be ruined. Therefore, in the control method (travel control method) according to the present embodiment, the travel control method, the travel control program, and the (travel) control system 100 of the working vehicle 1, and the working vehicle 1 that can easily perform the recovery processing efficiently are implemented by adopting the configuration described below.

That is, the travel control method according to the present embodiment includes allowing the working vehicle to automatically travel along the target route in the agricultural field F1 (work field) and performing the recovery processing. As described above, the recovery processing is processing of moving the working vehicle 1 to the recovery position Pr1 and further moving the working vehicle 1 from the recovery position Pr1 to the entry position Pa1 in a case where the deviation including at least one of the position deviation and the orientation deviation of the working vehicle 1 with respect to the target route R10 exceeds the threshold when the working vehicle 1 enters the target route R10 from the entry position Pa1 of the target route R10. The recovery position Pr1 is a position where the deviation is reduced and entry (from the entry position Pa1) to the target route R10 can be started. In the recovery processing, the recovery travel direction, which is the travel direction of the working vehicle 1 until reaching the target position, is set according to at least a positional relationship between the actual position Pr0 of the working vehicle 1 and a next target position.

Here, the "next target position" is a current target position to which the working vehicle 1 is to be moved in the recovery processing, and is, for example, the recovery position Pr1 or the entry position Pa1. That is, in the present embodiment, the recovery processing is roughly divided into a first section for moving the working vehicle 1 from the start position of the recovery processing to the recovery position Pr1, and a second section for moving the working vehicle 1 from the recovery position Pr1 to the entry position Pa1. The "target position" in the first section is the recovery position Pr1, and the "target position" in the second section is the entry position Pa1.

By default, the recovery processing unit 75 moves the working vehicle 1 backward toward the recovery position Pr1 which is the target position in the first section, and moves the working vehicle 1 forward toward the entry position Pa1 which is the target position in the second section. In the present embodiment, the travel direction (recovery travel direction) of the working vehicle 1 until reaching such target position is not fixed as it is by default, but is dynamically set according to the positional relationship between the actual position Pr0 of the working vehicle 1 and the target position (the recovery position Pr1 or the entry position Pa1).

That is, even if a significant position deviation of the working vehicle 1 occurs in the spin turn before the first section or the spin turn before the second section, the recovery processing unit 75 of the control device 7 sets the travel direction (recovery travel direction) of the working vehicle 1 to either forward or backward depending on at least the positional relationship between the actual position Pr0 and the target position. Consequently, in the first section of the recovery processing, the working vehicle 1 is not always moved backward toward the target position (recovery position Pr1), but is switched between forward movement and backward movement. Similarly, in the second section of the recovery processing, the working vehicle 1 is not always moved forward toward the target position (entry position Pa1), but is switched between forward movement and backward movement. Therefore, the travel control method according to the present embodiment has an advantage that the recovery processing is easily performed efficiently.

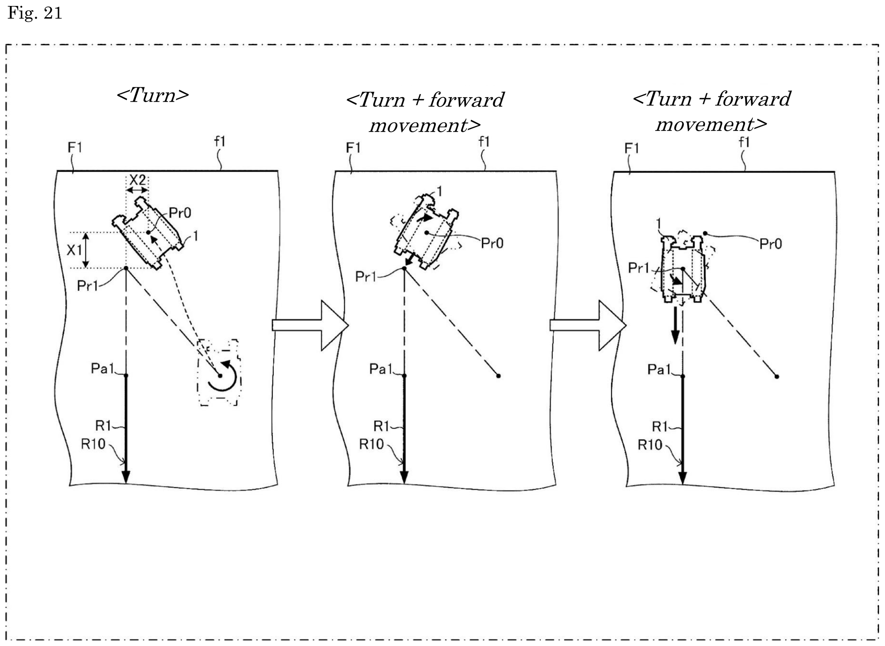

As an example, Fig. 21 illustrates an example in which the position of the working vehicle 1 significantly deviates (from the start position of the recovery processing) at the time of the spin turn (that is, the first spin turn in the recovery processing) immediately before the first section for moving the working vehicle 1 from the start position of the recovery processing to the recovery position Pr1. As indicated by "turn" in Fig. 21, it is assumed that, as a result of significant deviation of the position of the working vehicle 1 at the time of first spin turn in the recovery processing, the working vehicle 1 moves while performing the spin turn, moves past (passes by) the recovery position Pr1, and the spin turn is completed at the actual position Pr0.

When the working vehicle 1 at such actual position Pr0 is moved to the next target position (recovery position Pr1), in a case where the working vehicle 1 is located at the actual position Pr0 after moving past the recovery position Pr1, the recovery processing unit 75 sets the recovery travel direction according to the positional relationship between the actual position Pr0 and the target position (recovery position Pr1). In the example in Fig. 21, in the extension direction of the target route R10, the actual position Pr0 is a position deviated from the target position (recovery position Pr1) to the side opposite to the entry position Pa1 by a distance X1. In an orthogonal direction orthogonal to the extension direction of the target route R10, the actual position Pr0 is a position deviated from the target position (recovery position Pr1) to the front side by a distance X2.

In this case, the recovery processing unit 75 switches the recovery travel direction from the default backward movement to the forward movement by setting the recovery travel direction to "forward movement". The recovery processing unit 75 allows the working vehicle 1 to turn (clockwise in the drawing) and then moves the working vehicle 1 forward to the target position (recovery position Pr1) (turn + forward movement). Furthermore, the recovery processing unit 75 allows the working vehicle 1 that has reached the target position (recovery position Pr1) to turn (counterclockwise in the drawing) and then moves the working vehicle 1 forward toward the entry position Pa1 (turn + forward movement).

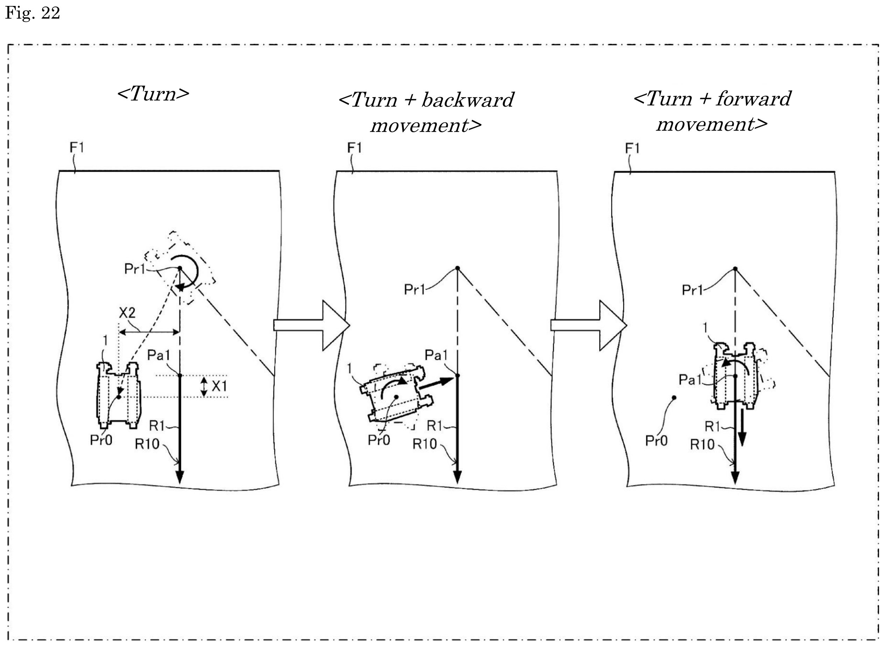

In contrast, Fig. 22 illustrates an example in which the position of the working vehicle 1 significantly deviates (from the recovery position Pr1) at the time of the spin turn (that is, the second spin turn in the recovery processing) immediately before the second section for moving the working vehicle 1 from the recovery position Pr1 to the entry position Pa1. As indicated by "turn" in Fig. 22, it is assumed that, as a result that the position of the working vehicle 1 significantly deviates at the time of second spin turn in the recovery processing, the working vehicle 1 moves past (passes by) the entry position Pa1 while performing the spin turn, and the spin turn is completed at the actual position Pr0.

When the working vehicle 1 at such actual position Pr0 is moved to the next target position (entry position Pa1), in a case where the working vehicle 1 is located at the actual position Pr0 after moving past the entry position Pa1, the recovery processing unit 75 sets the recovery travel direction according to the positional relationship between the actual position Pr0 and the target position (entry position Pa1). In the example in Fig. 22, in the extension direction of the target route R10, the actual position Pr0 is located at a position shifted by the distance X1 to the side opposite to the recovery position Pr1 with respect to the target position (entry position Pa1). In the orthogonal direction orthogonal to the extension direction of the target route R10, the actual position Pr0 is a position deviated from the target position (entry position Pa1) by a distance X2.

In this case, the recovery processing unit 75 switches the recovery travel direction from the default forward movement to the backward movement by setting the recovery travel direction to "backward movement". The recovery processing unit 75 allows the working vehicle 1 to turn (clockwise in the drawing) and then moves the working vehicle 1 backward to the target position (entry position Pa1) (turn + backward movement). Furthermore, the recovery processing unit 75 allows the working vehicle 1 that has reached the target position (entry position Pa1) to turn (counterclockwise in the drawing) and then moves the working vehicle 1 forward to enter the target route R10 from the entry position Pa1 (turn + forward movement).

Here, in the recovery processing, the recovery travel direction is set according to an approach direction, which is a travel direction from the recovery position Pr1 to the entry position Pa1 of the target route R10, in addition to the positional relationship (between the actual position Pr0 and the next target position). In short, the recovery travel direction is set in consideration of whether the working vehicle 1 is allowed to travel in the approach direction of forward movement or backward movement from the recovery position Pr1 toward the entry position Pa1 of the target route R10. Specifically, the recovery travel direction is set such that the direction (orientation) of the working vehicle 1 when reaching the target position is a direction close to the approach direction. Consequently, the turning angle of the working vehicle 1 at the target position can be suppressed to be small.

As described above, in the recovery processing, the recovery travel direction is set according to at least the positional relationship (between the actual position Pr0 and the target position) in the extension direction of the target route R10. Consequently, an appropriate recovery travel direction can be set depending on whether the working vehicle 1 has moved past the next target position in the extension direction of the target route R10.

As described above, in the recovery processing, the recovery travel direction is set according to at least the positional relationship (between the actual position Pr0 and the target position) in the orthogonal direction orthogonal to the extension direction of the target route R10. Consequently, an appropriate recovery travel direction can be set depending on whether the working vehicle 1 has moved past the next target position in the orthogonal direction of the target route R10.

Furthermore, as described above, in the recovery processing, the working vehicle 1 is allowed to turn from the actual position Pr0 toward the target position (the recovery position Pr1 or the entry position Pa1). For example, as illustrated in Fig. 21, the recovery processing unit 75 turns the working vehicle 1 when allowing the working vehicle 1 to travel from the actual position Pr0 to the target position (here, the recovery position Pr1) (turn + forward movement). Consequently, after turning, the working vehicle 1 can reach the target position even if the working vehicle 1 is allowed to travel straight from the actual position Pr0 to the target position.

Here, in the recovery processing, the turning direction of the working vehicle 1 is set according to the recovery travel direction. That is, for example, as illustrated in Fig. 21, the recovery processing unit 75 sets the turning direction (clockwise in the example of Fig. 21) of the working vehicle 1 at the actual position Pr0 in such a manner as to suppress the turning angle of the working vehicle 1 at the actual position Pr0 to less than 180 degrees in consideration of the recovery travel direction (forward movement in this case). Consequently, the turning angle of the working vehicle 1 can be suppressed to be small.

In the travel control method according to the present embodiment, in the recovery processing, the recovery travel direction is set according to the position of the outer peripheral edge f1 of the agricultural field F1 (work field) in addition to the positional relationship (between the actual position Pr0 and the target position). That is, for example, as illustrated in Fig. 21, the recovery travel direction is set such that the working vehicle 1 travels to the side opposite to the outer peripheral edge f1 as seen from the actual position Pr0. This makes it possible to suppress protrusion of the working vehicle 1 to the outside of the agricultural field F1.

The processing of setting the recovery travel direction until reaching the next target position is also performed in the re-recovery processing. That is, when performing the re-recovery processing, the re-recovery processing unit 77 sets the recovery travel direction, which is the travel direction of the working vehicle 1 until reaching the target position, according to at least the positional relationship between the actual position of the working vehicle 1 and the next target position as in the recovery processing described above. In the re-recovery processing, since the "target position" is the recovery position Pr1, the re-recovery processing unit 77 sets the recovery travel direction according to the positional relationship between the actual position of the working vehicle 1 and the recovery position Pr1 when performing the re-recovery processing.

### [4] Modifications

Modifications of the first embodiment are listed below. The modifications described below can be applied in combination as appropriate.

The control device 7 in the present disclosure includes the computer system. The computer system mainly includes one or more processors and one or more memories as hardware. The processor executes a program recorded in the memory of the computer system to implement a function as the control device 7 in the present disclosure. The program may be recorded in advance in the memory of the computer system, may be provided through a telecommunication line, or may be recorded and provided in a non-transitory recording medium, such as a memory card, an optical disk, or a hard disk drive, that is readable by the computer system. A part or all of the functional units included in the control device 7 may be configured of an electronic circuit.

It is not an essential configuration for the control device 7 that at least a part of the functions of the control device 7 are aggregated in one housing, and the components of the control device 7 may be dispersedly provided in a plurality of housings. Conversely, in the control device 7, the functions distributed over a plurality of devices (for example, the control device 7 and the client terminal 210) may be aggregated in one housing. Furthermore, at least a part of the functions of the control device 7 may be implemented by, for example, a cloud (cloud computing).

The working vehicle 1 may be used for work not only in an orchard such as a vineyard or an apple orchard but also in other agricultural field F1, or work field other than the agricultural field F1. Furthermore, the spray substance to be sprayed by the working vehicle 1 is not limited to the chemical solution, and may be, for example, water, a fertilizer, an antiseptic solution, or other liquids, or powder. Similarly, the spray target on which the sprayed substance is sprayed is not limited to grape tree, and may be other crops or objects other than crops (including inorganic substances). The working vehicle 1 is not limited to an unmanned vehicle that operates by automatic operation, and the working vehicle 1 may be configured in such a manner as to operate by operation (including remote operation) of a person (operator), and may be, for example, a boarding type (manned vehicle) that an operator can board. Also in this case, the working vehicle 1 is provided with the antenna 21 and the like to grasp the current position of the working vehicle 1.

The support frame 3 is only required to be attached to one end of the base machine 10 in the front-and-back direction D3, and may be attached at the front of the base machine 10. In this case, the working machine 400 supported by the support frame 3 is also arranged not at the back but at the front of the base machine 10.

The working machine 400 (sprayer 401 or weeder) is only required to be mounted on the base machine 10 of the working vehicle 1, and is not necessarily supported by the support frame 3. That is, at least one of the sprayer 401 and the weeder may be directly supported by the base machine 10 without the intervention of the support frame 3.

Specific means of notification and presentation is not limited to display on the display unit 211 of the client terminal 210, and may be display on another display unit, sound, transmission to an external terminal or other means, or a combination thereof.

The working vehicle 1 may include a pair of working machines 400 arranged in the front-and-back direction D3. Consequently, the working vehicle 1 can execute the work with each of the pair of the working machines 400 arranged in the front-and-back direction D3, and can promote an improvement in work efficiency as compared to a case where the work is performed by use of only one of the working machines 400. The working vehicle 1 may further include a rotary drive device that generates a rotational force that rotates the support frame 3 relative to the base machine 10 about the rotation axis Ax1.

The base machine 10 is only required to include the first block 10L and the second block 10R arranged side by side in the left-and-right direction D2, and the arrangement of the first block 10L and the second block 10R may be reversed in the left-and-right direction. That is, the first block 10L provided with the power source 63 and the like may be located on the right side, and the second block 10R provided with the user interface 61 and the like may be located on the left side.

The traveling unit 11 is not limited to a crawler type traveling device, and, for example, may be configured in such a manner as to include one or a plurality of wheels and travel by rotation of the wheels. The traveling unit 11 is not limited to a configuration driven by a hydraulic motor, and may be configured in such a manner as to be driven by an electric motor, for example.

The sprayer 401 as the working machine 400 is not limited to an air-assisted sprayer as in the first embodiment, and may be, for example, a sprayer of an electrostatic spraying system, or a system that is a combination of an air-assisted system and an electrostatic spraying system.

The power source 63 is not limited to an engine, and may include, for example, a motor (electric motor), or may be a hybrid power source including an engine and a motor.

The working vehicle 1 may be configured in such a manner that the base machine 10 does not have a portal frame shape and the entire base machine 10 travels between a pair of adjacent crop rows Vr1 (along the working passage). In this case, the working vehicle 1 travels along each working passage without straddling the crop row Vr1. In this case, the sprayer 401 performs the spray work, switching between a spray pattern that sprays the chemical solution to the left and right in the left-and-right direction D2, a spray pattern that sprays the chemical solution only to the left, and a spray pattern that sprays the chemical solution only to the right.

### [Additional Notes of Invention]

Hereinafter, an outline of the invention extracted from the above-described embodiment will be additionally described. Note that configurations and processing functions described in the following additional notes can be selected to be combined as desired.

### <Additional Note 1>

A control method of a working machine that includes a connection unit to which a wired device is connectable by wire and a wireless device is connectable via an adapter in place of the wired device, the working machine that performs work in a work field, the control method including:
discriminating whether a connected device connected to the connection unit is the wired device or the wireless device.

### <Additional Note 2>

The control method of the working machine according to the additional note 1, in which
the wired device and the wireless device are operation devices for operating the working machine.

### <Additional Note 3>

The control method of the working machine according to the additional note 2, in which
the connected device is discriminated on the basis of a discrimination signal input to the connection unit when the wired device or the wireless device is operated.

### <Additional Note 4>

The control method of the working machine according to the additional note 3, in which
the discrimination signal is generated by the adapter when the wireless device is operated.

### <Additional Note 5>

The control method of the working machine according to the additional note 3 or 4, in which
the operation includes a start operation for starting use of the operation device.

### <Additional Note 6>

The control method of the working machine according to any one of the additional notes 1 to 5, further including:
maintaining a discrimination result of the connected device until a release condition is satisfied.

### <Additional Note 7>

The control method of the working machine according to the additional note 6, in which

### the release condition includes restart of the working machine.

### <Additional Note 8>

The control method of the working machine according to any one of the additional notes 1 to 7, further including:
setting the working machine according to the discrimination result of the connected device.

### <Additional Note 9>

The control method of the working machine according to any one of the additional notes 1 to 8, in which
the discrimination result of the connected device includes "undetermined" in addition to the wired device and the wireless device.

### <Additional Note 10>

A control program for allowing one or more processors to execute the control method of the working machine according to any one of the additional notes 1 to 9.

### LIST OF REFERENCE SIGNS

- 1: Working vehicle (working machine)
- 7: Control device
- 8: Operation device
- 10: Base machine
- 74: Discrimination processing unit
- 80: Connection unit
- 81: Wired device
- 82: Wireless device
- 83: Adapter
- 100: Control system
- F1: Agricultural field (work field)

## Claims

1. A control method of a working machine that includes a connection unit to which a wired device is connectable by wire and a wireless device is connectable via an adapter in place of the wired device, the working machine that performs work in a work field, the control method comprising:
discriminating whether a connected device connected to the connection unit is the wired device or the wireless device.

2. The control method of the working machine according to claim 1, wherein
the wired device and the wireless device are operation devices for operating the working machine.

3. The control method of the working machine according to claim 2, wherein
the connected device is discriminated on the basis of a discrimination signal input to the connection unit when the wired device or the wireless device is operated.

4. The control method of the working machine according to claim 3, wherein
the discrimination signal is generated by the adapter when the wireless device is operated.

5. The control method of the working machine according to claim 3 or 4, wherein
the operation includes a start operation for starting use of the operation device.

6. The control method of the working machine according to any one of claims 1 to 4, further comprising:
maintaining a discrimination result of the connected device until a release condition is satisfied.

7. The control method of the working machine according to claim 6, wherein the release condition includes restart of the working machine.

8. The control method of the working machine according to any one of claims 1 to 4, further comprising:
setting the working machine according to a discrimination result of the connected device.

9. The control method of the working machine according to any one of claims 1 to 4, wherein
a discrimination result of the connected device includes "undetermined" in addition to the wired device and the wireless device.

10. A control program for allowing one or more processors to execute the control method of the working machine according to any one of claims 1 to 4.

11. A control system used in a working machine that includes a connection unit to which a wired device is connectable by wire and a wireless device is connectable via an adapter in place of the wired device, the working machine that performs work in a work field, the control system comprising:
a discrimination processing unit that discriminates whether a connected device connected to the connection unit is the wired device or the wireless device.

12. A working machine comprising:
the control system according to claim 11; and
a base machine controlled by the control system.

13. A working machine that performs work in a work field, the working machine comprising:
a control device that controls the working machine by an operation signal from an operation device including a wired device or a wireless device; and
a connection unit for connecting the wired device by wire, wherein
the connection unit is configured to enable wired connection of an adapter for receiving an operation signal transmitted from the wireless device when the wireless device is operated.
